# EUROPEAN PATENT APPLICATION

(11) **EP 4 818 865 A1**
(43) Date of publication of application: **07.10.2026**
(21) Application number: 26169927.6
(22) Date of filing: 31.03.2026
(51) Int. Cl.: G06F 3/0482, G06Q 50/40, G08G 5/22

(54) **SYSTEMS AND METHODS FOR CONTROLLING A GRAPHICAL USER INTERFACE OF A VEHICLE MANAGEMENT SYSTEM**

(30) Priority: 31.03.2025 US 202563780607 P; 08.01.2026 US 202619443626
(71) Applicant: The Boeing Company, Arlington, VA 22202 (US)
(72) Inventor: LANTZ, Kim Reidar, ARLINGTON, 22202 (US); ALTUS, Stephen S., CHICAGO, 60606 (US); UCZEKAJ, Sarah Joyce, ARLINGTON, 22202 (US); OUTZEN, Glenn Aarhus, ARLINGTON, 22202 (US); JOHANSEN, Dennis, MELBY (DK)
(74) Representative: Plasseraud IP

(57) **Abstract**

A system and method for dynamically controlling a display of a graphical user interface (GUI) of a computer system includes receiving, via the GUI, one or more user inputs, and automatically changing a magnification of plural graphical icons displayed on the GUI between plural different levels of magnification responsive to receiving the one or more user inputs. Changing the magnification of the plural graphical icons changes a size of one or more of the graphical icons and a number of the plural graphical icons displayed on the GUI.

## Description

### BACKGROUND

### FIELD OF THE DISCLOSURE

The present disclosure relates to a vehicle management system and a method of dynamically controlling a graphical user interface (GUI) of the vehicle management system.

### DESCRIPTION OF THE ART

In the aviation industry, different airline companies may employ numerous flight dispatchers that may be responsible for monitoring large volumes of flights associated with aircrafts owned and/or operated by the different airline companies. The flight dispatchers may be responsible for monitoring hundreds of flights into and out of various global airports and identifying potential disruptions with any of the flights being monitored. The disruptions may be caused by ambient weather conditions at departing and destination locations, unplanned aircraft maintenance requirements, issues with a flight crew, issues with planned routes, or the like. The dispatchers may be responsible for identifying potential disruptions, and making one or more changes to the disrupted flight and any other flights that may be subsequently disrupted.

Some known flight planning and monitoring systems rely on static flight lists, displaying between about 25 to about 50 flights per display screen. While these planning systems may be adequate for monitoring smaller operations (e.g., a smaller fleet of vehicles, etc.), this approach limits the number of flights an individual may be able to manage, and therefore the scalability of an operating organization. For example, dispatchers and dispatch managers struggle to understand a complete operational overview and quickly identify disruptions or anomalies, as known planning systems lack flexibility in visualization. With fixed lists, dispatchers are forced to manually filter or scan through flights, which makes it challenging to identify and prioritize disruptions, and make timely decisions. This leads to inefficiencies, delayed responses, and increased operational risk in complex flight environments. Dispatchers faced with a combination of disruptions and nominal flights are likely to miss perishable opportunities to improve efficiency and can even cause further disruptions due to missed deadlines.

### BRIEF SUMMARY

In one example, a method for dynamically controlling plural graphical icons displayed on a graphical user interface (GUI) of a computer system is provided and as per the appended claims.

In another example, a method of changing an appearance of plural graphical icons displayed on a graphical user interface (GUI) of a computer system is provided. The method involves receiving, via the GUI, one or more user inputs to change a magnification of one or more of the graphical icons displayed on the GUI; and automatically changing the magnification of the one or more graphical icons displayed on the GUI between a first level of magnification and a second level of magnification. Changing the magnification of the one or more graphical icons changes a size of the one or more graphical icons and a number of the one or more graphical icons displayed on the GUI. The one or more graphical icons display a first set of information while the one or more graphical icons are at the first level of magnification, and the one or more graphical icons display a second set of information while the one or more graphical icons are at the second level of magnification.

In another example, a non-transitory computer-readable storage medium comprising executable instructions that, in response to execution, cause one or more control units comprising one or more processors to perform the operations described herein.

In another example, a vehicle management system is provided comprising a dispatcher center, comprising at least one control unit configured to communicate with at least one vehicle and configured to communicate with a user via the GUI according to the operations described herein.

### BRIEF DESCRIPTION OF THE DRAWINGS

Figure 1 illustrates one example of a schematic of one example of a vehicle management system.
Figure 2 illustrates a schematic of a control system, according to one example of the present disclosure.
Figures 3A-3H illustrate a first view of a graphical user interface (GUI) of a control system, according to one example of the present disclosure.
Figures 4A-4H illustrate a second view of the GUI, according to one example of the present disclosure.
Figures 5A-5J illustrate a third view of the GUI, according to one example of the present disclosure.
Figures 6A-6J illustrate a fourth view of the GUI, according to one example of the present disclosure.

### DETAILED DESCRIPTION

In the realm of flight planning and management systems, there is a growing need for a planning system that is customizable, dynamic, scalable, and flexible. The present methods and vehicle management systems address these challenges by providing a system that allows an operator to zoom in and out of flight details, displaying anywhere from a single flight as a detailed graphical "card" to hundreds of flights as simple "dots" on a single screen. This flexibility gives the dispatchers a comprehensive overview of all operations, allowing them to focus on what matters most at any given time, even when relative priorities do not match problem severities. The present systems and methods provide to operators supporting multiple flights an integrated system that combines dynamic visual representation, real-time grouping, and AI-driven query capabilities. The systems and methods enable dispatchers to monitor flight operations through scalable visual displays. Situational awareness may additionally be enhanced by i) grouping of flights; ii) ordering of flights within groups; and iii) status indicators for each individual flight that may be visually displayed to the operator. Flight groupings may be based on one or more preset rules, or may be learned from an artificial intelligence (AI) system.

In one example, the vehicle management systems and methods described herein may include an AI powered system that assists the operator with static, dynamic, and natural language queries, that automatically detects anomalies and assists the operators with prioritizing their attention. Compared with known planning systems, the AI powered system minimizes manual scanning and filtering required by the operator, may assist the operator in making real-time decisions more quickly and with improved accuracy, ultimately reducing response times to disruptions while ensuring that routine verifications are not missed while dealing with disruptions, improving overall efficiency.

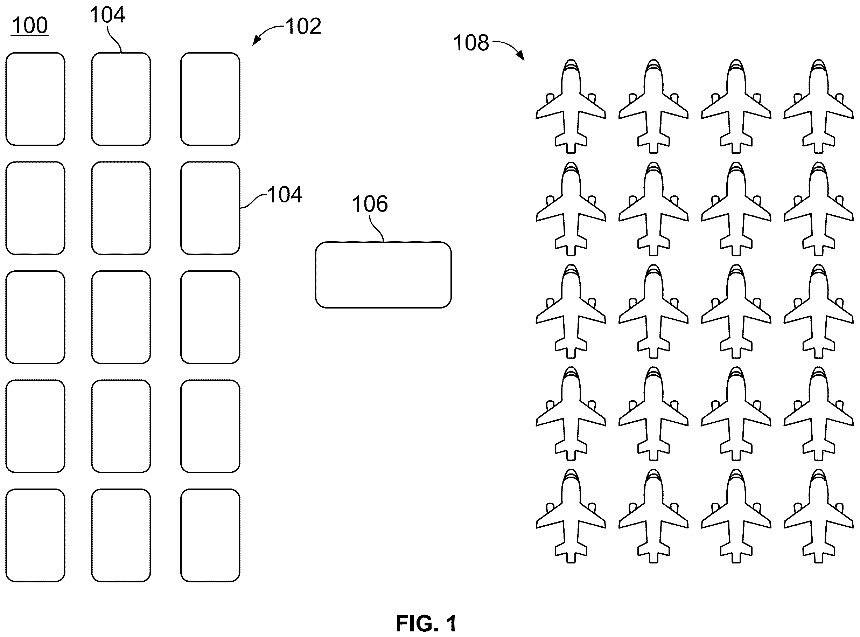

Figure 1 illustrates a schematic of one example of a vehicle management system 100. The vehicle management system 100 includes a dispatch center 102 with one or more control units 104 associated with the dispatch center 102. In one or more examples, the dispatch center may represent an airline operations center, an air-traffic controller, or the like. In one example, the control units 104 may be located in separate global locations relative to one or more other control units 104, may be separately operated by one or more operators, or the like. In another example, the vehicle management system 100 may include two or more dispatch centers that may be geographically separated from each other, wherein each dispatch center may include one or more of the control units.

The one or more control units 104 may be used to monitor, observe, track, control, instruct, guide, or the like, one or more vehicles 108. The vehicles 108 may be included in or associated with a fleet of vehicles. The vehicles 108 in the illustrated example of Figure 1 are aircrafts that may be associated with a common fleet, may be owned and/or operated by a common entity, may be common or similar types of vehicles, or the like. In other examples, the vehicles 108 may be alternative aerial vehicles (e.g., helicopters, drones, etc.) or non-aerial vehicles (e.g., marine vessels, buses, cars, mining vehicles, trucks, locomotives, or the like).

The control units 104 may be communicatively coupled with each other control unit and/or with the vehicles 108. Additionally, the control units 104 and the vehicles 108 may be wirelessly communicatively coupled with a remote system 106, which may represent a cloud-based data system. In one example, the remote system 106 may include a memory (not shown) that may store data (e.g., generated data and/or received data) that may be accessed by the one or more control units 104 and/or the vehicles 108. In another example, the remote system 106 may be a relaying system, such as a satellite that may relay communications between the vehicles 108 and/or the control units 104.

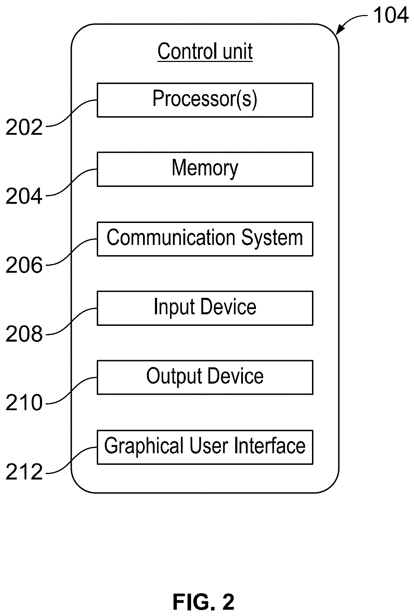

Figure 2 illustrates a schematic of one of the control units 104, according to one example of the present disclosure. As used herein, the term "control system," "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. For example, the control unit 104 may be or include one or more processors 202 that are configured to control one or more of the operations as described herein.

The control unit 104 is configured to execute a set of instructions that are stored in one or more of a memory 204 or one or more other data storage units or elements in order to process data. The memory 204 may also store data or other information as desired or needed. The memory may be in the form of an information source or a physical memory element within a processing machine.

The set of instructions may include various commands that instruct the control unit 104 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine, such as another control unit 104 associated with the vehicle management system 100.

The diagrams of examples herein may illustrate one or more control or processing units, such as the control unit 104. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 104 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory.

The control unit 104 includes a communication system 206 that can include or represent one or more antennas, transceivers, radios, communication networks (such as private and/or public internet communications), and/or the like. The communication system 206 may be communicatively coupled with communications systems of the other control units 104, with communication systems of one or more of the vehicles 108, or the like.

The control unit 104 includes an input device 208 that can represent a keyboard, a headset, a microphone, an electronic mouse, a stylus, or the like; and an output device 210 that can represent a speaker, a light, a display screen, or the like. The control unit 104 also includes a graphical user interface (GUI) 212 that can represent an electronic monitor, a television, a touchscreen, and/or the like. In at least one example, two or more of the input device 208, the output device 210, and/or the GUI 212 may be integrated into a single element and may be associated with a computer workstation, a single touchscreen interface, a handheld device (e.g., a smartphone, a smart tablet, or the like), or the like.

Each of the control units 104 may be operated by one or more operators that may be responsible for monitoring, observing, and/or tracking a travel plan of one or more of the vehicles 108 via the control unit 104. In one example, each operator may be responsible for monitoring, observing, and/or tracking details associated with dozens of vehicles, hundreds of vehicles, thousands of vehicles, or the like. Optionally, each operator may be responsible for monitoring, observing, tracking details associated a number of vehicles moving within a geographic region, moving within a predetermined period of time, or the like.

In one example, the operators may monitor the travel details of one or more vehicles and may make adjustments to some of the predetermined travel details of one or more of the vehicles 108, such as based on environmental factors (e.g., ambient weather conditions), based on maintenance requirements or repair issues of the vehicles, based on destinations (e.g., congestion at a target destination may require arriving at an alternative destination or at an alternative time, an airport may be experiencing personnel issues such as a strike by air traffic controllers, etc.), or the like. In one example, the operators may interact with the control unit 104 (e.g., provide one or more inputs) to request alternative or additional information to be displayed via the GUI 212, to change an amount of data that is displayed via the GUI 212, to change a type of data that is displayed via the GUI 212, to change an arrangement of the information that is displayed via the GUI 212, or the like. For example, the operators may provide one or more inputs to the control unit 104 via the input device 208 to change the arrangement of the information that is displayed, to change the amount and/or type of information that is displayed, to make changes to a travel plan of one or more of the vehicles 108, to communicate with one or more vehicles 108 and/or another control unit 104, or the like.

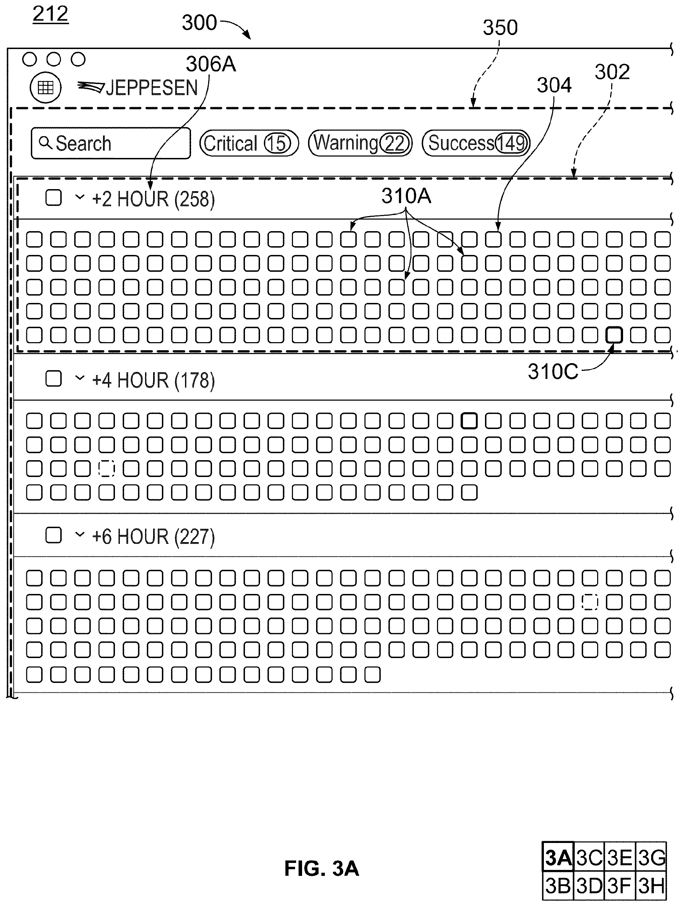

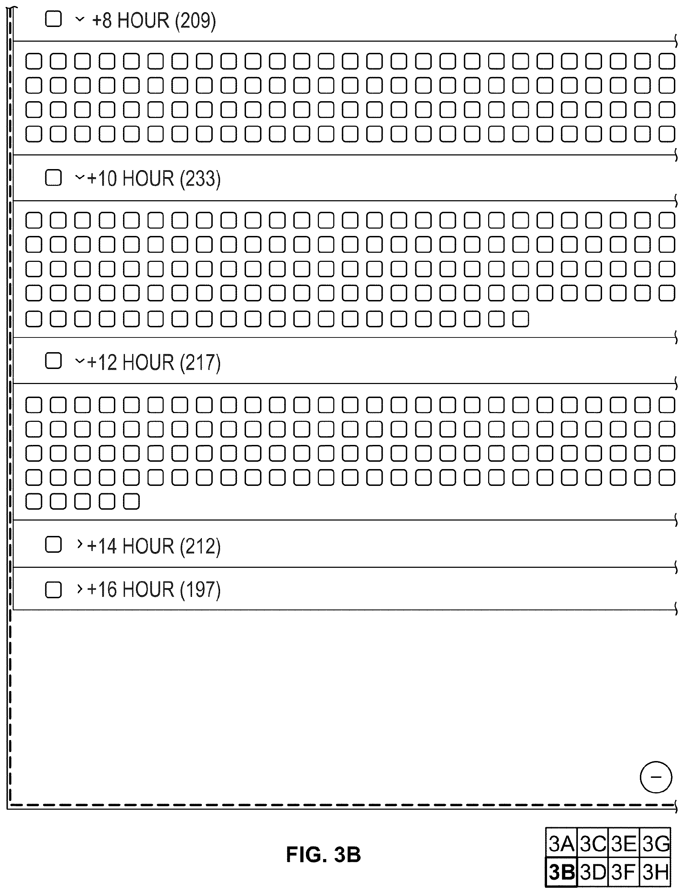

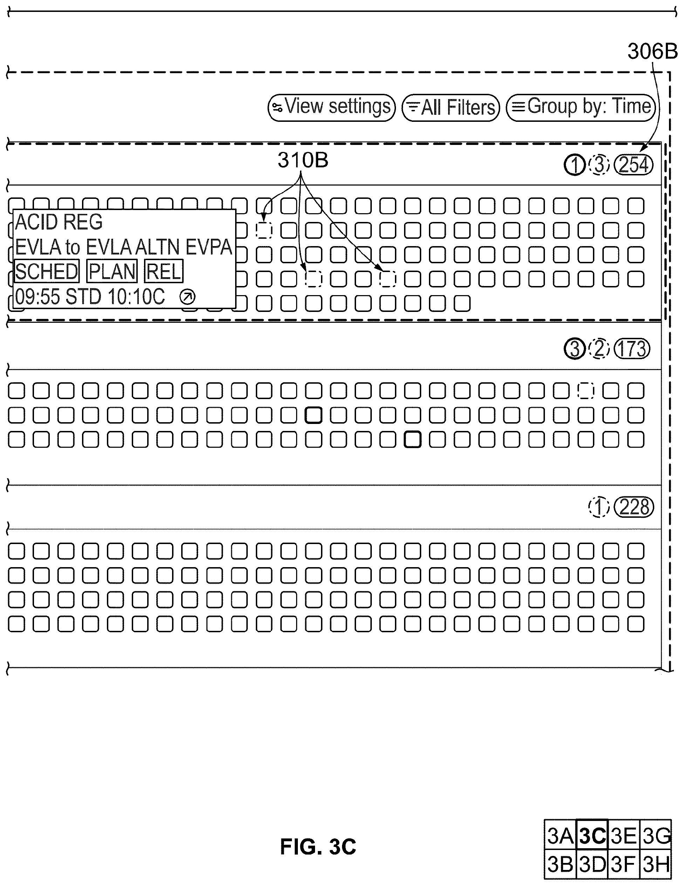

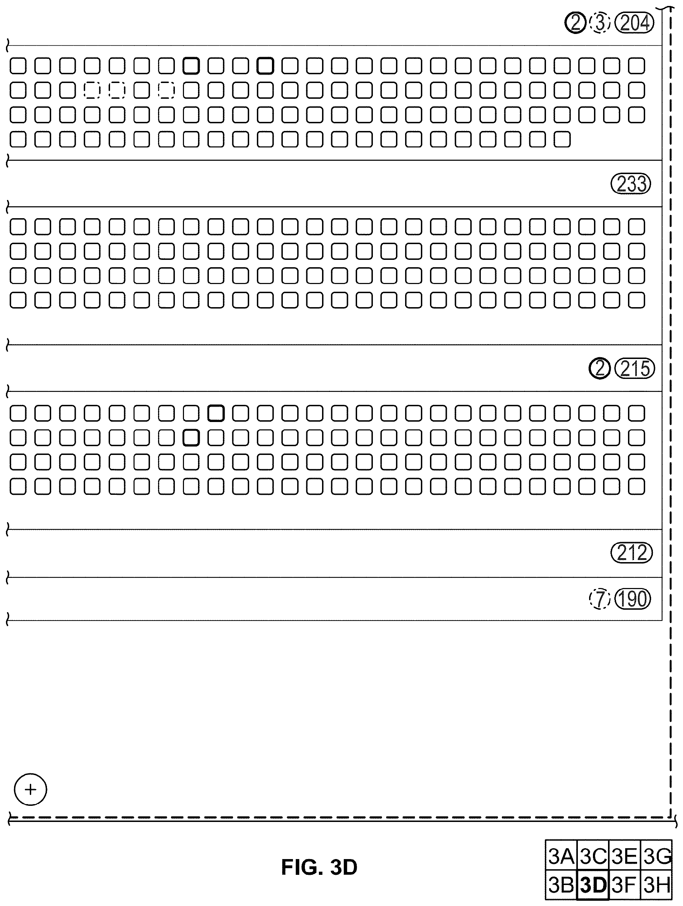

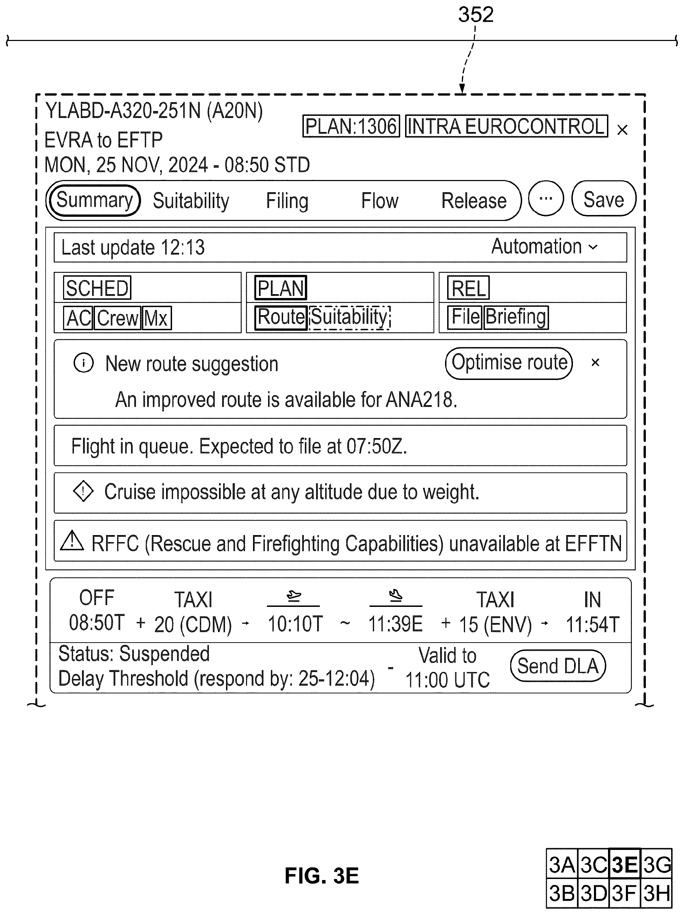

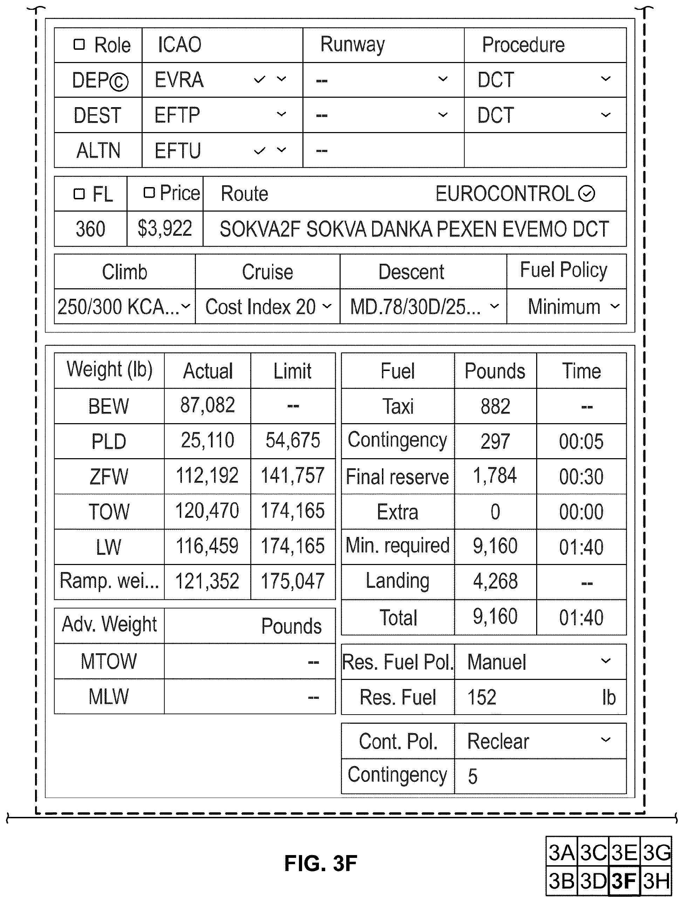

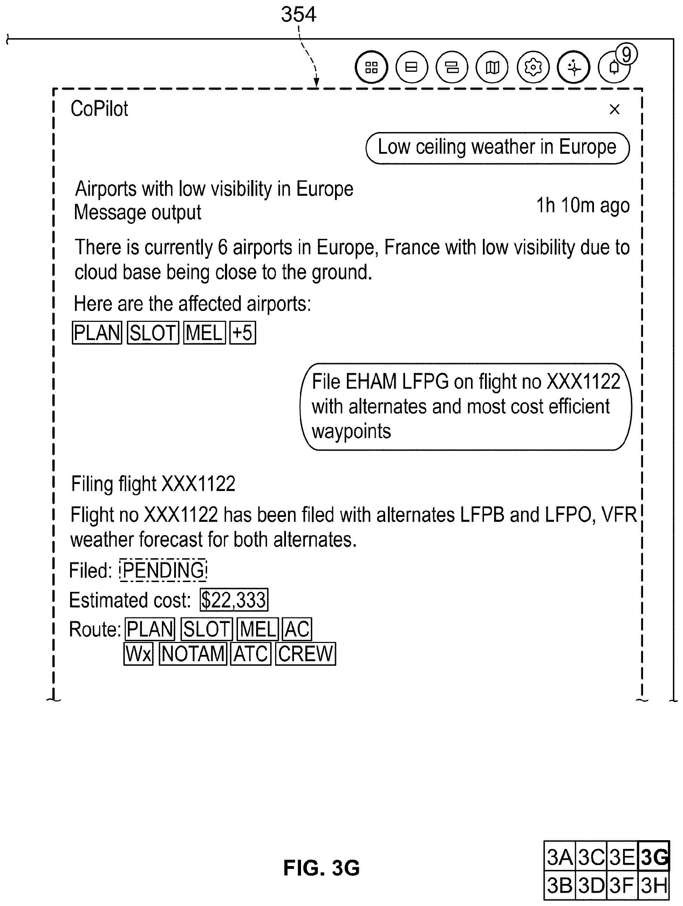

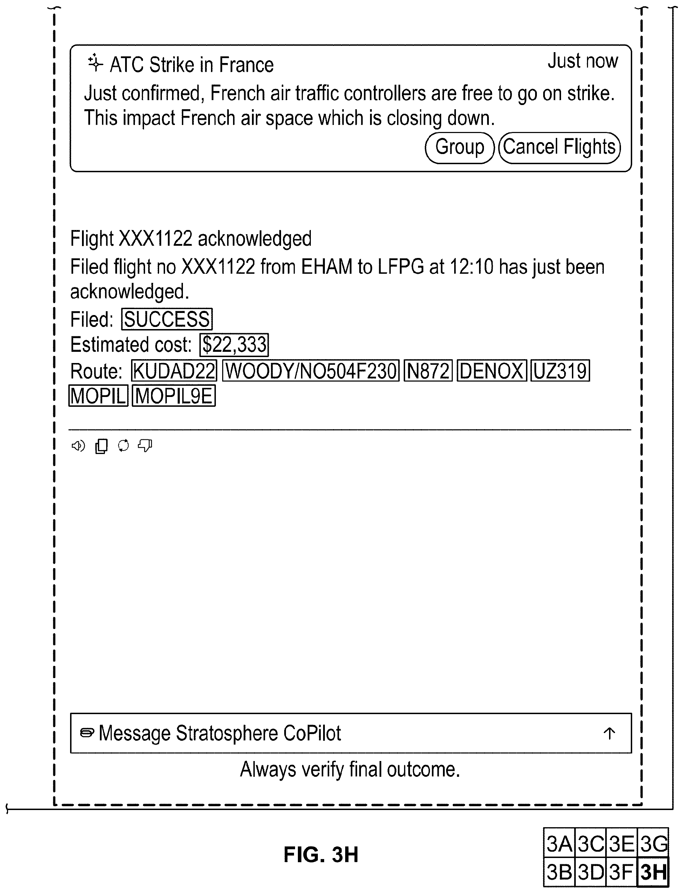

The operator interacts with the control unit 104 via the input device 208 to review travel plans, changes to travel plans, status updates, vehicle issues, or the like, with dozens, hundreds, or even thousands of different vehicles 108. Figures 3 through 6 illustrate at least some information that may be displayed to the operator via the GUI 212, changes to the GUI 212 of the type and/or amount of information displayed to the operator based on the control unit 104 receiving one or more inputs from the operator, recommendations that may be determined by the processor(s) 202 and presented to the operators, or the like. The illustrated examples of Figures 3 through 6 are for illustrative purposes only, and in alternative examples, the GUI 212 may present data in an alternative arrangement, may present additional and/or alternative types or amounts of data, may include additional or alternative graphical images, or the like.

Figures 3A-3H illustrate a first view 300 of the GUI 212 of the control unit 104, according to an example of the present disclosure. The first view 300 of the GUI 212 includes a first section 350 (shown in Figures 3A-3D), a second section 352 (shown in Figures 3E and 3F), and a third section 354 (shown in Figures 3G and 3H). In the illustrative example, the first section 350 includes hundreds of graphical icons 304, each graphical icon 304 indicative of a travel plan of one of the vehicles 108. The graphical icons 304 are grouped and arranged together based on designated windows of time, such as vehicles that are expected to travel in about 2 hours, in about 4 hours, in about 6 hours, in about 8 hours, in about 10 hours, in about 12 hours, in about 14 hours, and in about 16 hours.

The first section 350 includes one or more summary details 306A, 306B that provide a visual indication to the operator of a status associated with the graphical icons 304. For example, a first summary detail 306A provides a summary of the number of vehicles expected to travel in the designated windows of time (e.g., a summary of the number of graphical icons 304 that are included or associated with each of the designated windows of time). For example, the first summary details 306A indicate that 258 vehicles are expected to travel in about 2 hours, that 178 vehicles are expected to travel in about 4 hours, that 227 vehicles are expected to travel in about 6 hours, that 209 vehicles are expected to travel in about 8 hours, that 233 vehicles are expected to travel in about 10 hours, that 217 vehicles are expected to travel in about 12 hours, that 212 vehicles are expected to travel in about 14 hours, and that 197 vehicles are expected to travel in about 16 hours.

The second summary details 306B provide a breakdown of the graphical icons 304 associated with each of the designated windows of time based on a status of each vehicle or travel plan of the vehicle. In the illustrated example, the statuses indicated by the second summary details 306B indicate a successful status (e.g., indicated by a green visual icon that may indicate that there are no expected delays or issues), a moderate status (e.g. indicated by a yellow visual icon that may indicate that delays or issues may occur), and a critical status (e.g., indicated by a red visual icon that may indicate that delays or issues are expected). For example, referring to a first portion 302 (e.g., the vehicles expected to travel in about 2 hours), the second summary details 306B indicate that 254 vehicles have a successful status, that 3 vehicles have a moderate or warning status, and that 1 vehicle has a critical status. Additionally, each of the graphical icons 304 that are associated with the successful status are displayed with a first status indicator 310A (e.g., a hollow green icon), each of the graphical icons 304 that are associated with the warning status are displayed with a second status indicator 310B (e.g., a solid orange icon), and each of the graphical icons 304 that are associated with the critical status are displayed with a third status indicator 310C (e.g., a solid red icon). The first and second summary details 306A, 306B, and the visual indicators 310A-C provide a summary to the operator of the status of each of the vehicles, such as each of the vehicles that the operator is responsible for monitoring. Additionally, the summary details and the visual indicators may allow the operator to quickly identify potential anomalies and/or detect disruptions with the vehicles being monitored.

In one or more examples, the status indicators 310A-B and/or the summary details 306A-B may provide real-time, up-to-date information to the operator such that the real-time information displayed within the first section 350 may automatically and dynamically change responsive to real-time changes in the vehicle and/or travel details. For example, the second summary details 306B may change and the status indicator of one of the graphical icons 304 may change from a first status indicator 310A (a hollow green icon) to a second status indicator 310B (a solid orange icon), such as responsive to a trip of the vehicle associated with the graphical icon expected to have delays or issues.

In the illustrated example of Figures 3A-3D, the graphical icons 304 displayed within the first section 350 are grouped or arranged based on the designated windows of time in which the vehicles, represented by the icons 304, are expected to travel. In another example, the graphical icons 304 displayed within the first section 350 may be grouped together and/or arranged based on a phase of operation in which each vehicle is in. For example, the different phases of operation may include, but are not limited to, i) vehicles that have scheduled departure times but not all resources (e.g., pilots, flight staff, aircraft perishable and non-perishable supplies, etc.) have been assigned, ii) vehicles having all resources assigned but the resources are not present at a departure location, iii) vehicles having all resources assigned and all resources are at the departure location but the vehicle has not yet departed, iv) vehicles that have left a departure location but are not yet in transit (e.g., aircrafts that are not yet airborne, locomotives that have not yet departed from a rail yard, marine vessels that have not departed from a marina, etc.), or the like. Optionally, one or more other phases of operation may include i) vehicles that are scheduled for travel but have not yet requested travel authority (e.g., an approval to execute a proposed travel plan), ii) vehicles that have requested travel authority but approval has not yet been granted, iii) vehicles that have received travel authority but have not yet departed, iv) vehicles that have left a departure location but are not yet airborne or have not left a shared resource area, v) vehicles that are airborne, or the like.

The second section 352 (shown in Figures 3E and 3F) displays information or data associated with one of the vehicles. For example, the operator may provide a user input (e.g., via an electronic mouse, a touchscreen, a stylus, etc.) to select one of the graphical icons 304 displayed in the first section 350, and information associated with the graphical icon 304 that is selected may be displayed in the second section 352. The information may include, but is not limited to, a vehicle identification, vehicle details (e.g., dimensions, weights, weight requirements, fuel details, etc.), a trip identification (e.g., flight number), travel date(s), estimated travel time(s), a breakdown of estimated travel time(s) (e.g., estimated time to taxi, scheduled time of departure, scheduled time of arrival, etc.), actual travel time(s) (e.g., for a vehicle that is enroute), planned departure location, destination location, alternative destination location(s), route details (e.g., climb details, cruising details, descent details), summary notes to the operator (e.g., limitations about cruising altitude limitations, emergency services that may be available or unavailable at the departure, destination, or alternative destination locations, suggested alternative route, etc.), or the like. In another example, the GUI 212 may include additional information, alternative information, information arranged in an alternative configuration, or the like.

In one or more examples, the information displayed within the second section 352 may remain displayed on the GUI 212 until the operator selects a different graphical icon 304 in the first section. As another example, the information displayed within the second section 352 may automatically update based on one or more updates associated with the travel plans of the vehicle associated with the graphical icon that was selected. For example, the second section 352 may provide real-time, up-to-date information to the operator such that the real-time information displayed within the second section 352 may automatically change. As one example, details about the crew associated with the vehicle may change (e.g., the crew may be delayed, the individuals within the crew may change, etc.) while the information is displayed within the second section 352, and the details provided within the second section 352 may automatically change or update responsive to the changes to the details associated with the crew.

In one or more examples, the control unit 104 may represent and/or include an artificial intelligence (AI), machine learning (ML), artificial neural network (ANN), a recurrent neural network (RNN), a long short-term memory (LSTM) network, or the like, that can access data stored within the memory 204, within a memory of another control unit 104, within a memory of the remote system 106, or the like, and that performs operations described herein. The AI system can assist the operator of the control unit 104, such as by providing information to the operator via the GUI 212 or output device 210, by changing an appearance and/or configuration of at least some of the data displayed on the GUI 212, or the like. For example, the AI system may present or display the assisting information to the operator in the third section 354 of the GUI 212.

As one example, the operator may submit the user input(s) to the control unit 104. The user inputs can include keystrokes, electronic mouse inputs, electronic stylus inputs, detected touches on a touchscreen and/or on the GUI 212, or the like. The AI system of the control unit 104 can receive the user inputs, and in one example, can provide the inputs to a large language model (LLM) of the control unit 104. The LLM may be a model stored within the memory 204 or in another tangible and non-transitory computer readable storage medium. The LLM can be trained to identify the context of the user input, as well as information that may be responsive to the user input. For example, the LLM can receive the user inputs, and based on these inputs, determine what information will assist the operator, determine whether a change in the arrangement or appearance of the some of the information displayed to the operator may be useful, determine if two or more graphical icons should be associated with a common group or with different groups of graphical icons, or the like.

The LLM can output the inquiry purpose to the AI system, which can automatically access one or more, or several different databases to obtain information helpful to responding to the inquiry. In one or more examples, the databases may represent tangible and non-transitory computer readable storage mediums that can represent different sections or partitions within the same storage medium. The databases may be maintained by the control unit 104, by the dispatch center 102, or by a third party, such as an airport, another airline, a maintenance or repair center, a weather center, or the like. The AI system can access the databases in order to obtain information that may be helpful in assisting the operator, information associated with travel plans of one or more of the vehicles, information associated with one or more of the departure or destination locations, information associated with ambient weather conditions at the departure and/or destination locations, or the like.

As one example, the AI system may assist the operator by automatically detecting anomalies or disruptions with one or more of the vehicles associated with one or more of the graphical icons 304. As another example, the AI system may automatically and dynamically group graphical icons together in one or more different groups based on one or more parameters (e.g., departure time, aircraft type, disruption type, etc.). As another example, the AI system may assist the operator by automatically prioritizing their attention to one or more of the groups of icons, to one or more issues or anomalies associated with one or more of the graphical icons, or the like. As another example, the AI system may provide real-time decisions and/or recommendations to the operator, or the like, such as by communicating a recommendation to the operator via the GUI 212 and/or output device 210. As another example, the AI system can obtain information that can assist with natural language queries, such as by automatically providing a language translation into a preferred language of the operator. As another example, the AI system may assist the operator with management of the plural graphical icons representing vehicles the operator is responsible for managing.

In one or more examples, the AI system can assist the operator by automatically scanning and filtering details associated with each of the thousands of graphical icons (each indicative of a vehicle) being monitored by the operator, by automatically and dynamically grouping two or more of the graphical icons together based on one or more characteristics, automatically presenting information responsive to the scanning and/or filtering of details, etc.

The AI system may automatically and continuously review the user inputs, monitor details associated with each graphical icon, monitor details associated with the one or more databases, or the like, and continuously provide updates to the operator in order to assist the operator with managing travel of each of the vehicles. The AI system may present or display the information to the operator via the GUI 212, via the output device 210 (e.g., communicating an audio alarm or alert), or the like. For example, in the illustrated example of Figures 3H and 3G, the third section 354 includes information presented by the AI system, which include details associated with weather conditions at departing and/or destination locations, a recommendation for alternative destination locations for one or move trip plans of one of the vehicles, estimated costs associated with the recommendation, notification of personnel on strike, or the like. In alternative examples, the details presented by the AI system within the third section 354 may include additional or alternative information, may automatically change, may be presented in an alternative arrangement, or the like.

In one or more examples, the operator may want to view additional or alternative data associated with the vehicles, may want to change an arrangement of some of the graphical icons 304 displayed on the GUI 212 (e.g., based on a group to which the graphical icons may be assigned or associated therewith, based on a status of the graphical icons, based on vehicle type, based on destination location, based on departure location, based on vehicle maintenance requirements, based on visual preferences of the operator, or the like), or the like. The control unit 104 may receive one or more user inputs from the operator, which may automatically change at least some of the information displayed on the GUI 212. For example, the amount of information, a type of information, an arrangement of the information, or the like, displayed on the GUI 212 may automatically change responsive to the control unit 104 receiving one or more user inputs from the operator.

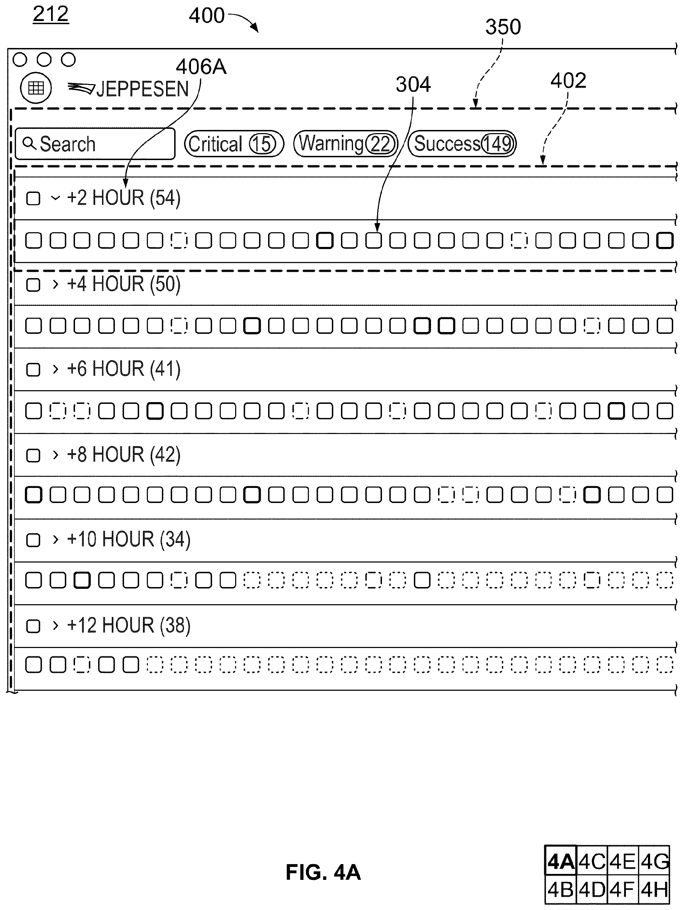

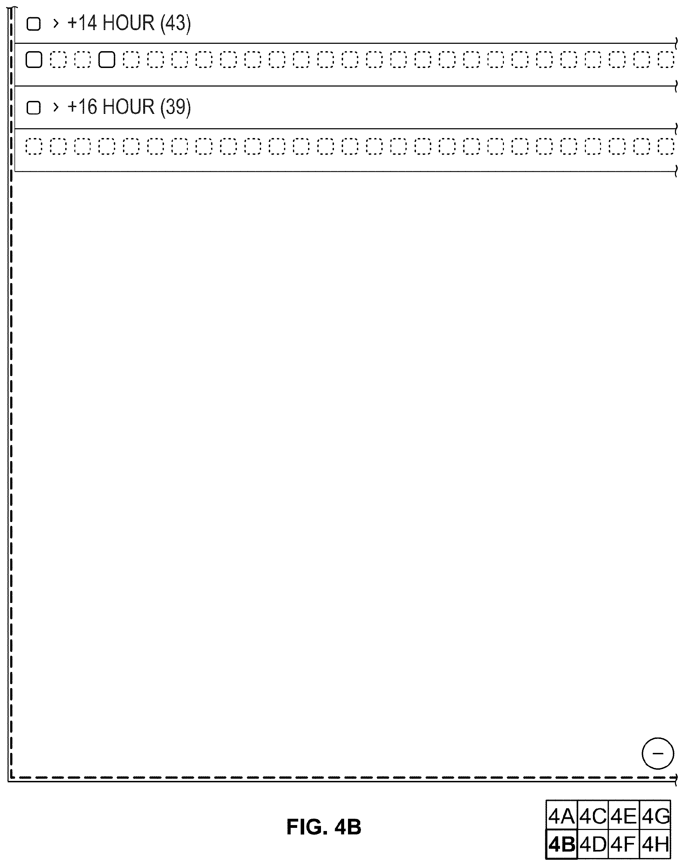

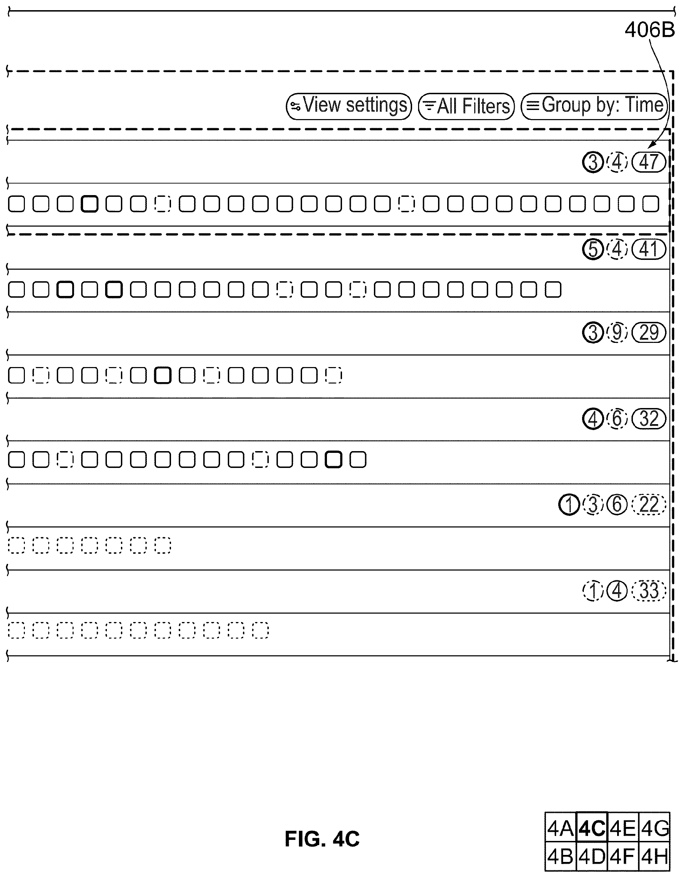

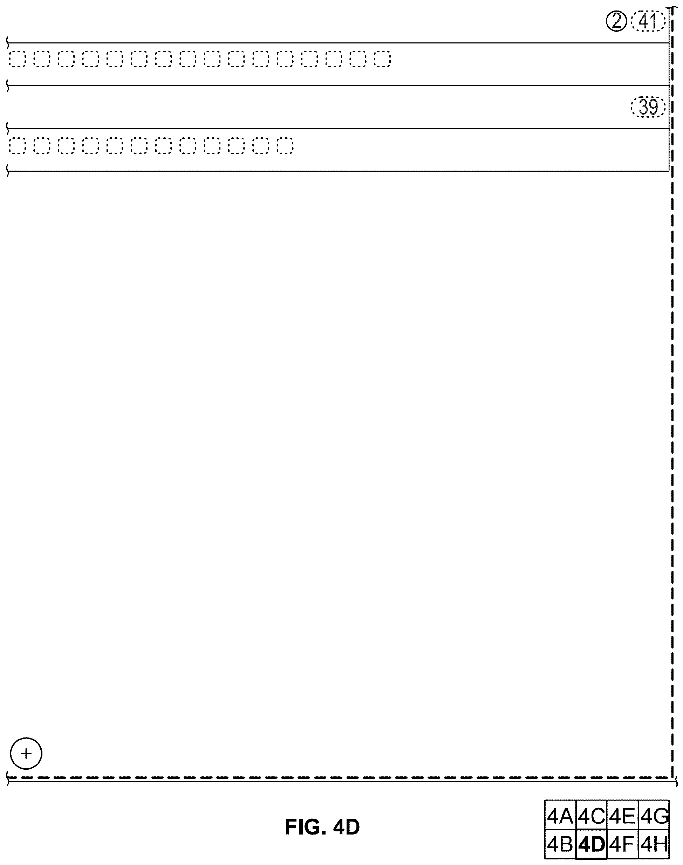

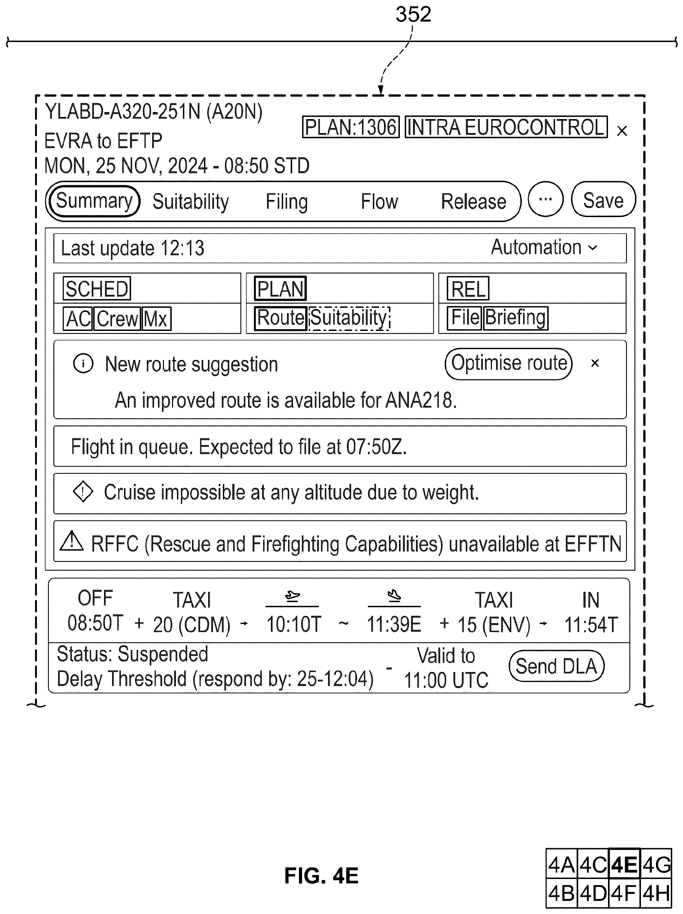

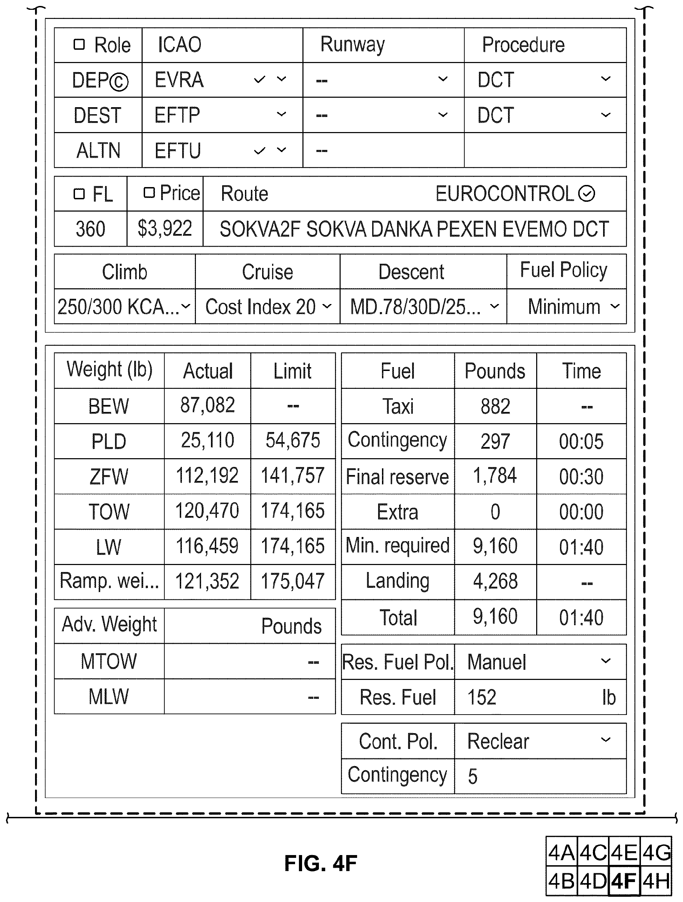

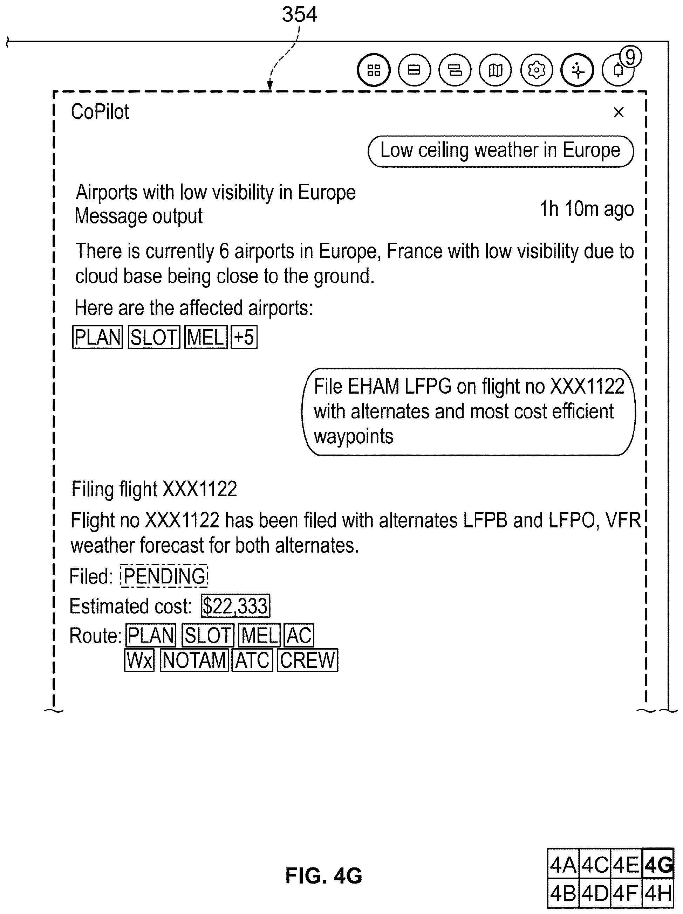

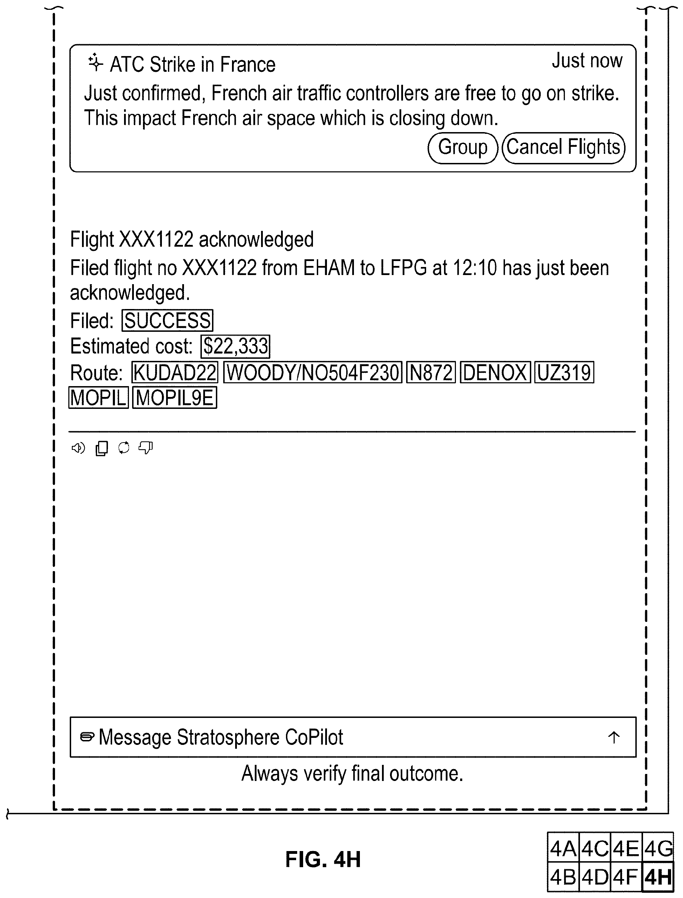

Figures 4A-4H illustrate a second view 400 of the GUI 212, according to one example of the present disclosure. The GUI 212 includes the first section 350 (shown in Figures 4A-4D), the second section 352 (shown in Figures 4E and 4F), and the third section 354 (shown in Figures 4G and 4H), but the amount of data presented to the operator in the first section 350 differs from the amount of data presented to the operator in the first section 350 illustrated in Figures 3A-3H. For example, a shape and size of the graphical icons 304 remains substantially unchanged between the first view 300 of Figures 3A-3D and the second view 400 of Figures 4A-4D, however the number of graphical icons 304 associated with each of the designated windows of time is different.

For example, the first portion 302 illustrated in Figures 3A-3D includes 258 graphical icons indicated by the first summary detail 306A, with the second summary detail 306B indicating that 254 vehicles have a successful status, that 3 vehicles have a warning status, and that 1 vehicle has a critical status. Alternatively, a second portion 402 illustrated in Figures 4A-4D includes 54 graphical icons indicated by a first summary detail 406A, with a second summary detail 406B indicating that 47 vehicles have a successful status, that 4 vehicles have a warning status, and that 3 vehicles have a critical status. As one example, the 258 graphical icons displayed in the first portion 302 of the first section 350 illustrated in Figures 3A-3D may be associated with a first set or a first group of the graphical icons; and the 54 graphical icons displayed in the second portion 402 illustrated in Figures 4A-4D may be associated with a different, second set or a second group of the graphical icons. The difference between the first group and the second group may be the departure location, the planned and/or alternative destination location, the type of vehicle, the size of vehicle, vehicles that require maintenance, routes of the vehicles, or the like.

In one or more examples, the operator may manually assign the graphical icons to one or more of the different groups. As another example, the AI system may automatically assign the graphical icons to one or more of the different groups, may automatically change a group designation of one or more of the graphical icons, may notify the operator if a group designation of one or more graphical icons should change, may notify the operator responsive to the group designation changing, or the like. In one or more examples, the AI system may be trained based on the one or more user inputs, and may additionally be repeatedly refined and retrained as new data becomes available, such as based on new data associated with the operator. In another example, the AI system may be trained, repeatedly refined, and retrained based on new data associated with other operators of other control units. For example, the AI system may identify one or more common trends, preferences in information operators of other control units request, preferences in the digital arrangement of the information on the respective GUIs of the other control units, preferences in how different graphical icons may be grouped together, or the like.

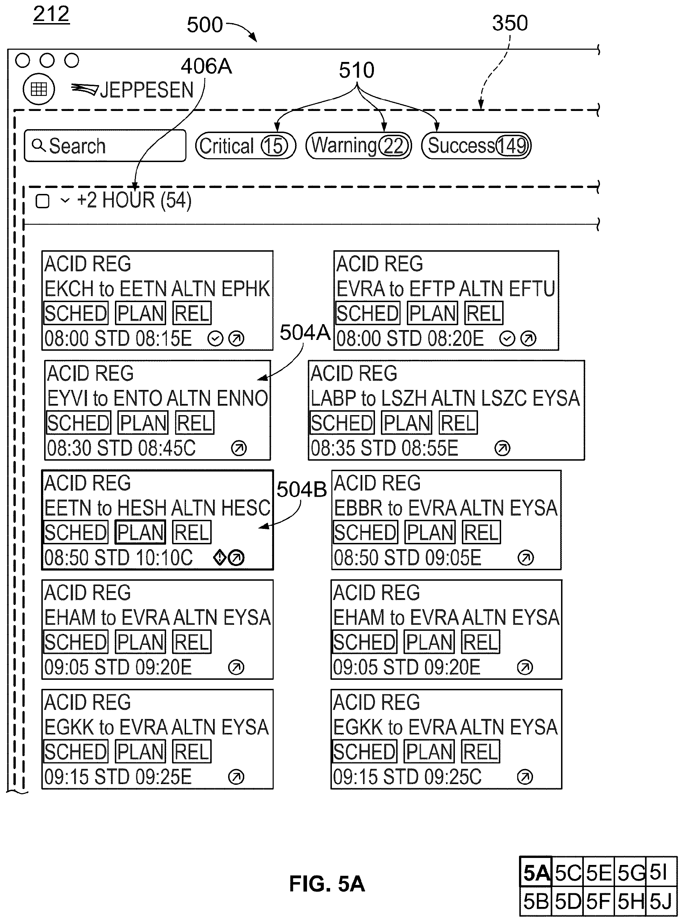

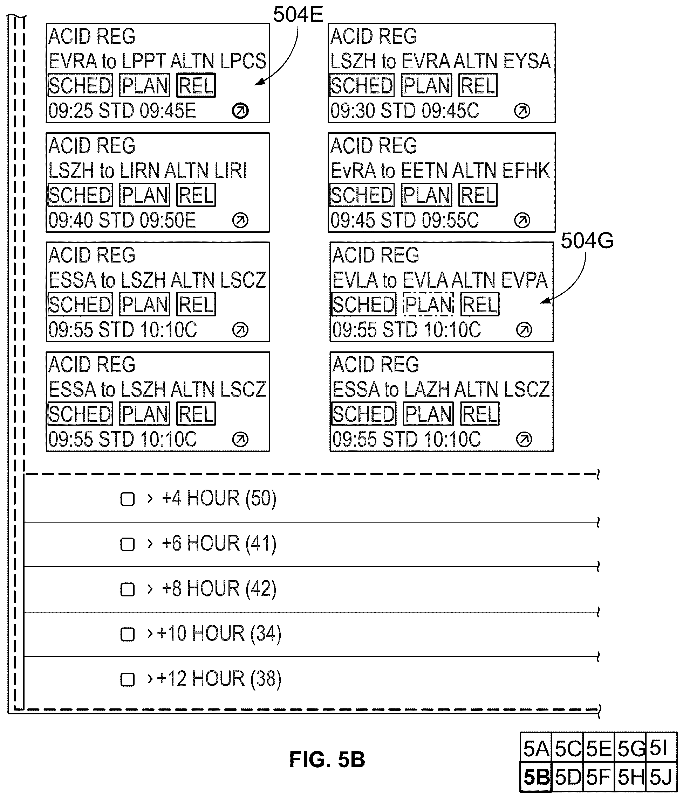

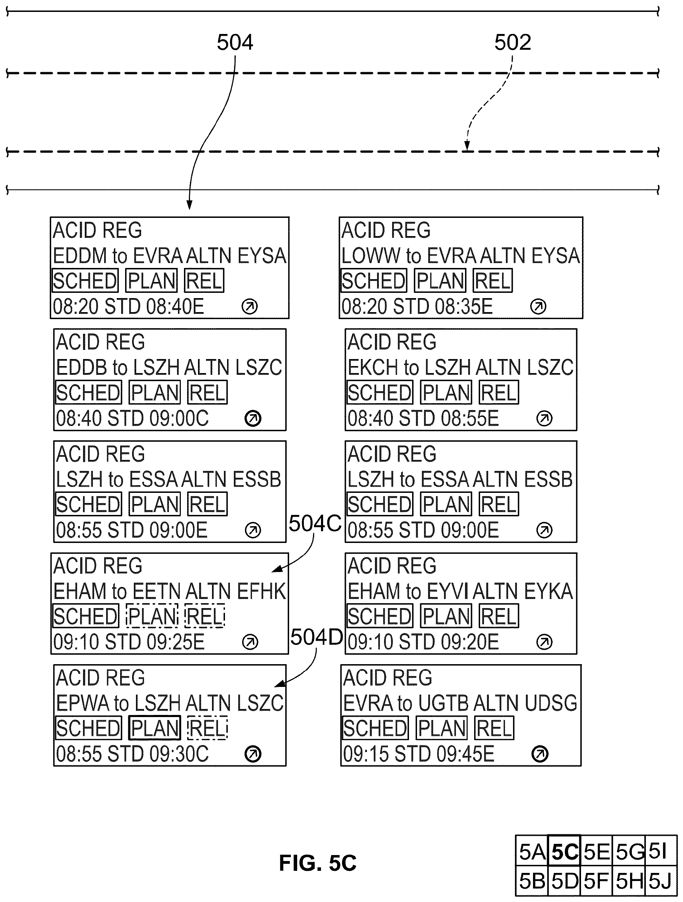

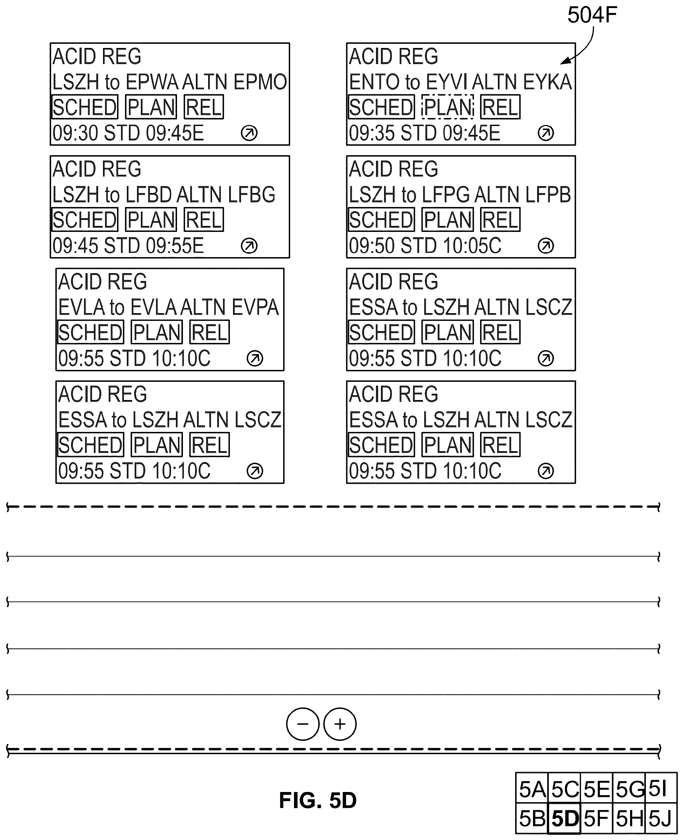

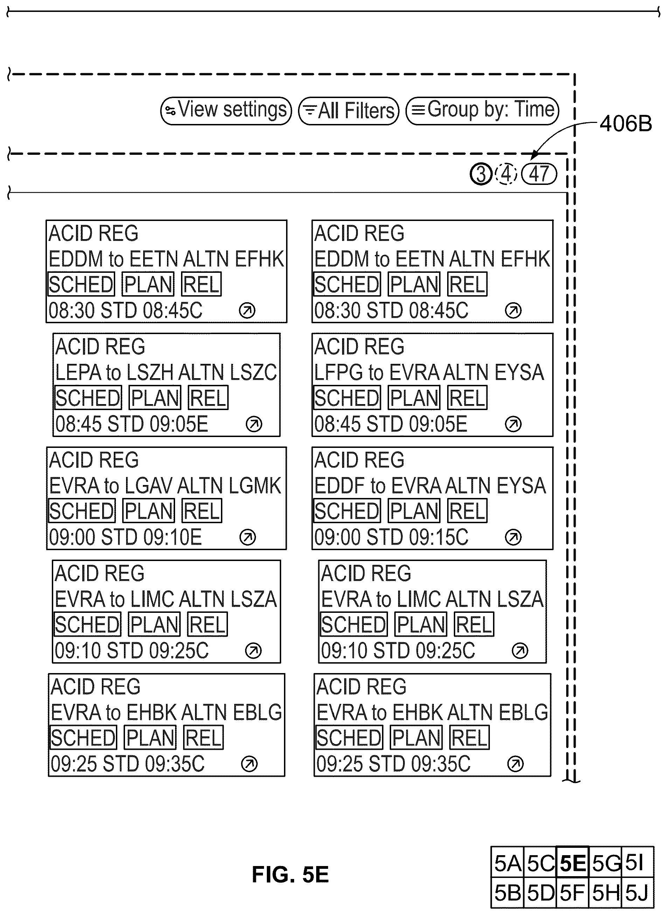

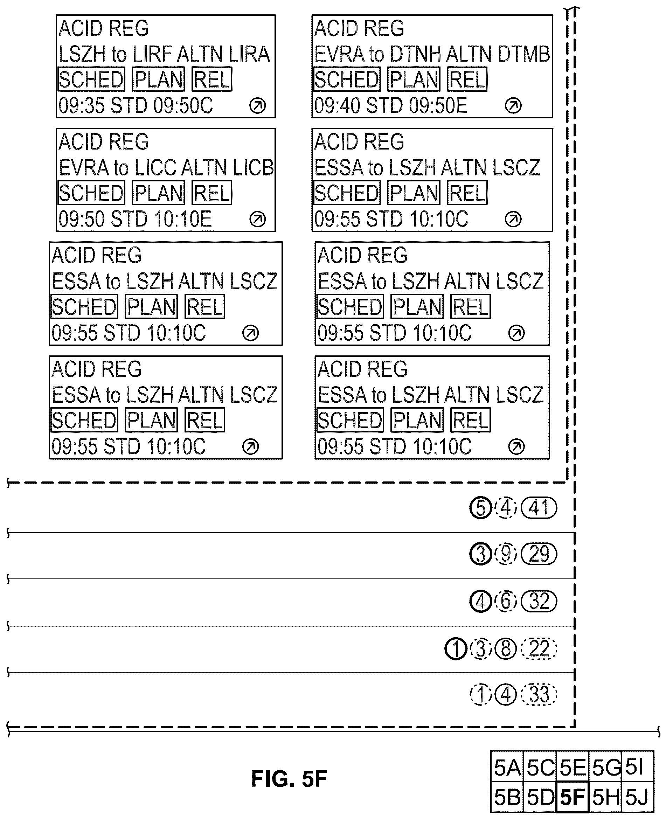

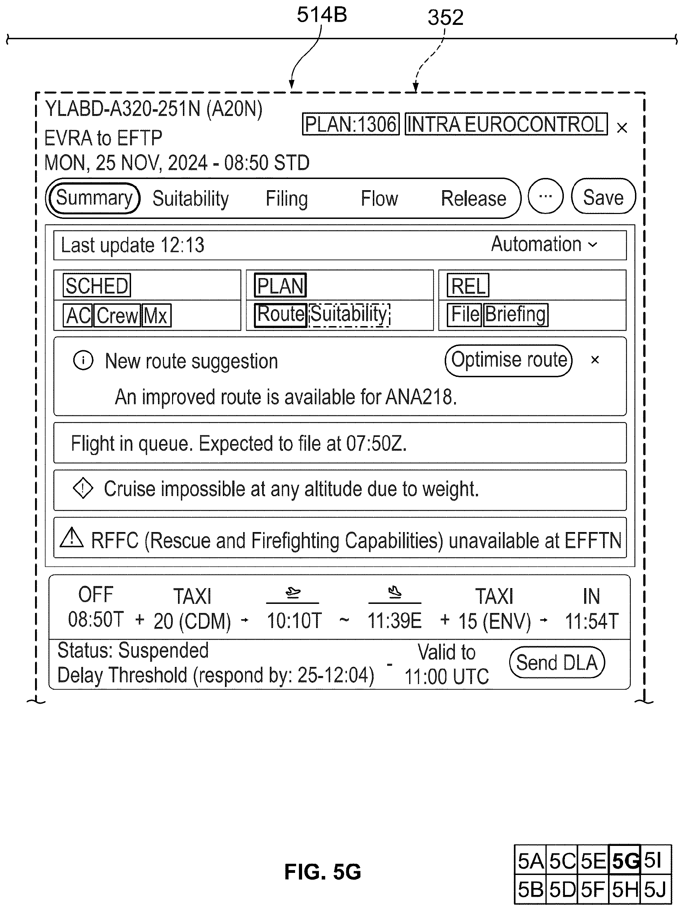

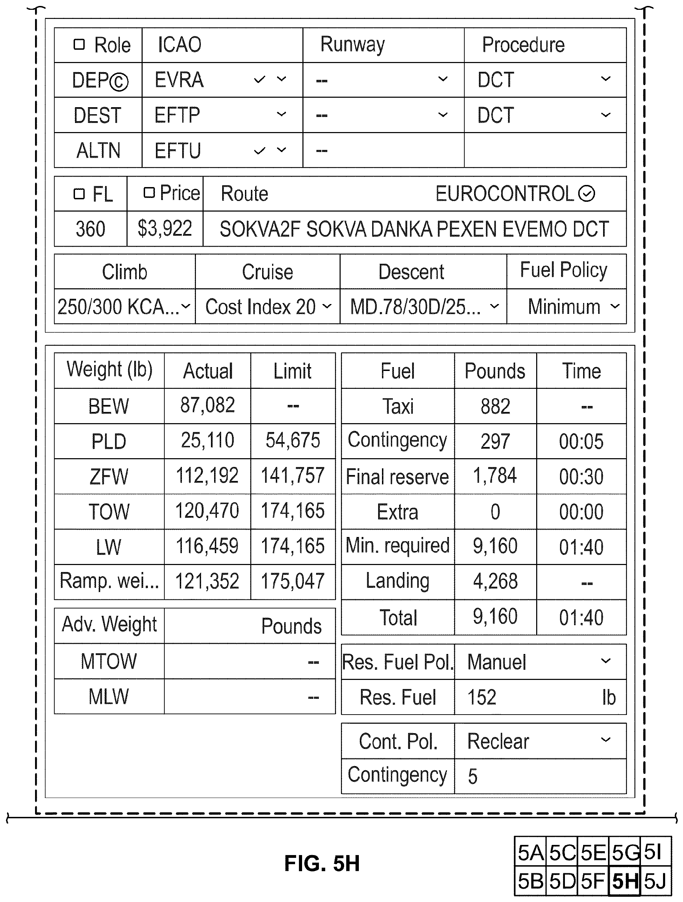

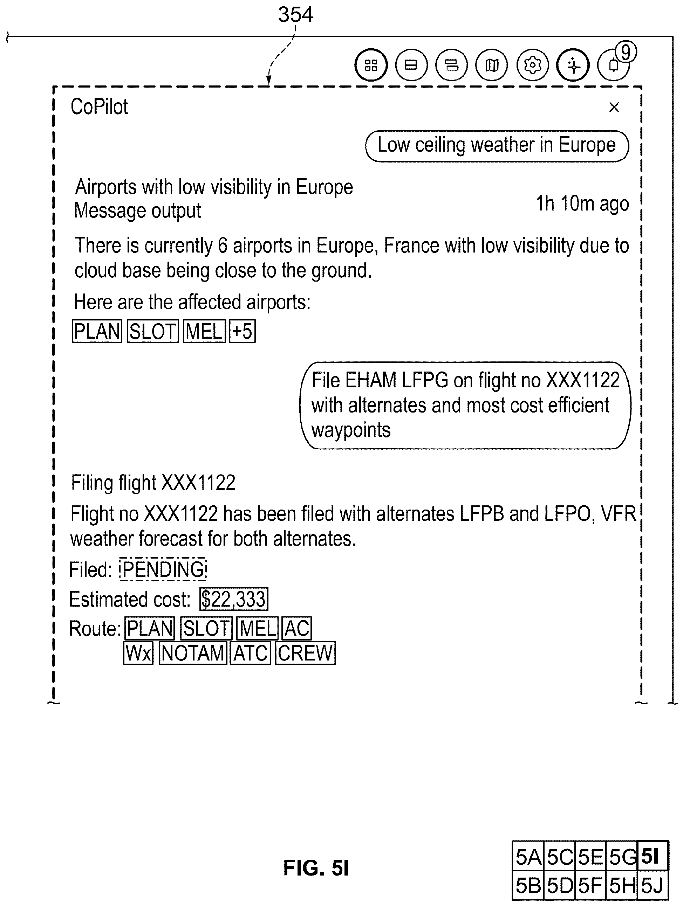

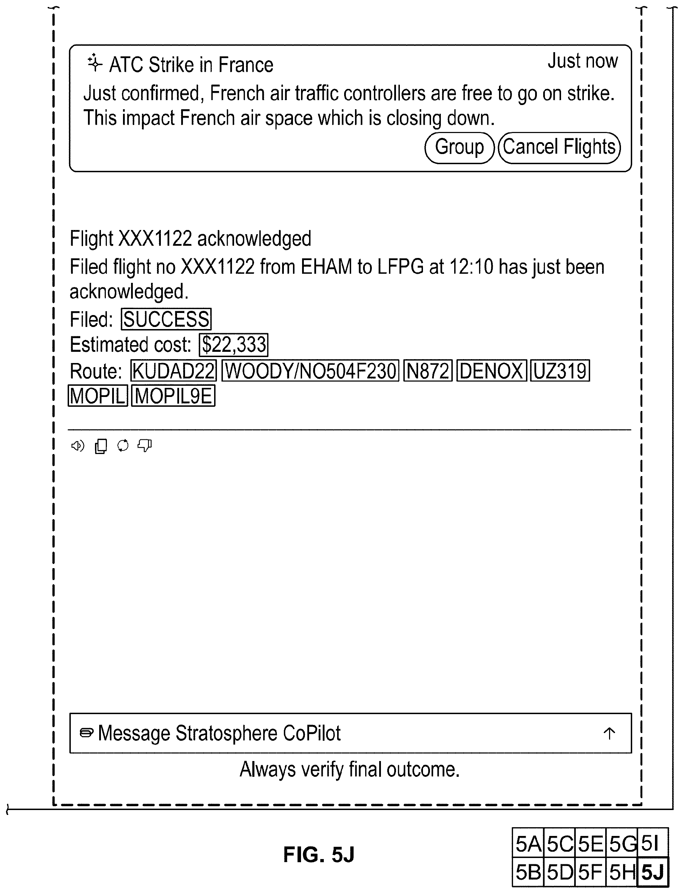

Figures 5A-5J illustrate a third view 500 of the GUI 212, according to one example of the present disclosure. The GUI 212 includes the first section 350 (shown in Figures 5A-5F), the second section 352 (shown in Figures 5G and 5H), and the third section 354 (shown in Figures 5I and 5J). Like the second portion 402 illustrated in Figures 4A-4D (e.g., the graphical icons associated with the vehicles expected to travel in about 2 hours), the third view 500 includes a third portion 502 that includes the same number of 54 graphical icons indicated by the first summary detail 406A, with the second summary detail 406B indicating that 47 vehicles have a successful status, that 4 vehicles have a warning status, and that 3 vehicles have a critical status. However, the amount of information displayed via the GUI 212 is different. For example, the third portion 502 includes plural graphical icons 504 that have a shape and size that differs from a shape and size of the graphical icons 304 displayed in the second portion 402 illustrated in Figures 4A-4D. Additionally, each of the graphical icons 504 illustrated in Figures 5A-5F includes an amount and type of data or information that differs from an amount and/or type of data included in the graphical icons 304.

In one or more examples, the control unit 104 may automatically change a magnification level of the graphical icons displayed within the first section 350 of the GUI 212 responsive to receiving one or more user inputs. For example, the first view 300 illustrated in Figures 3A-3H and the second view 400 illustrated in Figures 4A-4H may be at a first level of magnification, and the third view 500 illustrated in Figures 5A-5F may be a second level of magnification. In one or more examples, changing the magnification of the graphical icons may change an amount of information displayed by each of the graphical icons and/or may change a type of information displayed by each of the graphical icons. For example, the graphical icons 504 include information displayed via the GUI 212 that is not displayed by the graphical icons 304.

Additionally or alternatively, changing the magnification of the graphical icons may change a shape and/or size of the graphical icons, may change a location of each of the graphical icons within the first section 350, and/or may change a number of the graphical icons that can be displayed within the first section 350 (e.g., responsive to the shape and/or size of the graphical icons changing such that neighboring icons may be separated, spaced apart and not overlap with each other). While the illustrative examples of Figures 4A-D and 5A-F include a singular change in magnification, in alternative examples, one or more user inputs may change the display of the GUI 212 to a third or greater level of magnification, which may display additional types and/or amount of information, may change the shape and/or size of the graphical icons displayed, or the like.

In one or more examples, the operator may want to change a number of the graphical icons 504 that may be displayed, such as within the third portion 502. For example, the operator may want to remove or hide the graphical icons that are associated with a successful status, and may view only the graphical icons that have a warning status and/or a critical status. In the illustrated example of Figures 5A-5F, as indicated by the second summary detail 406B, four of the graphical icons (e.g., 504A, 504C, 504F, and 504G) have a warning status indicator (e.g., the indicator may include flashing an icon, changing an outline color of the icon, such as to yellow, etc.), and three of the graphical icons (e.g., 504B, 504D, and 504E) have a critical status indicator (e.g., the indicator may include outlining the icon in red). In the illustrated example of Figures 5A-5F, the graphical icons that include the warning and critical status indicators are displayed along with the graphical icons that include a successful status indicator (e.g., are outlined in green). Additionally, the graphical icons illustrated in the third portion 502 are arranged based on a scheduled time of departure for each of the vehicles.

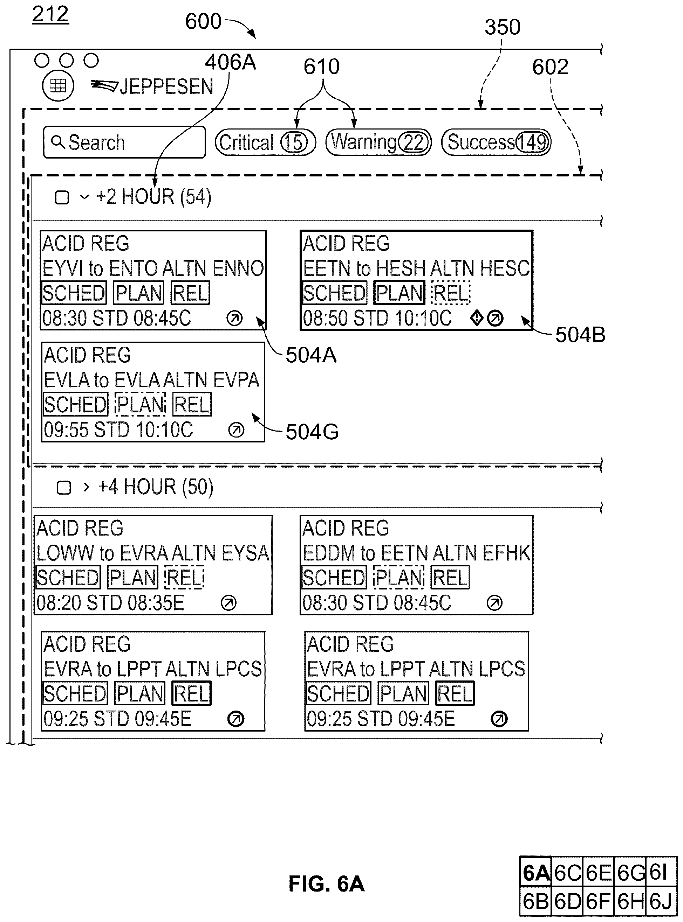

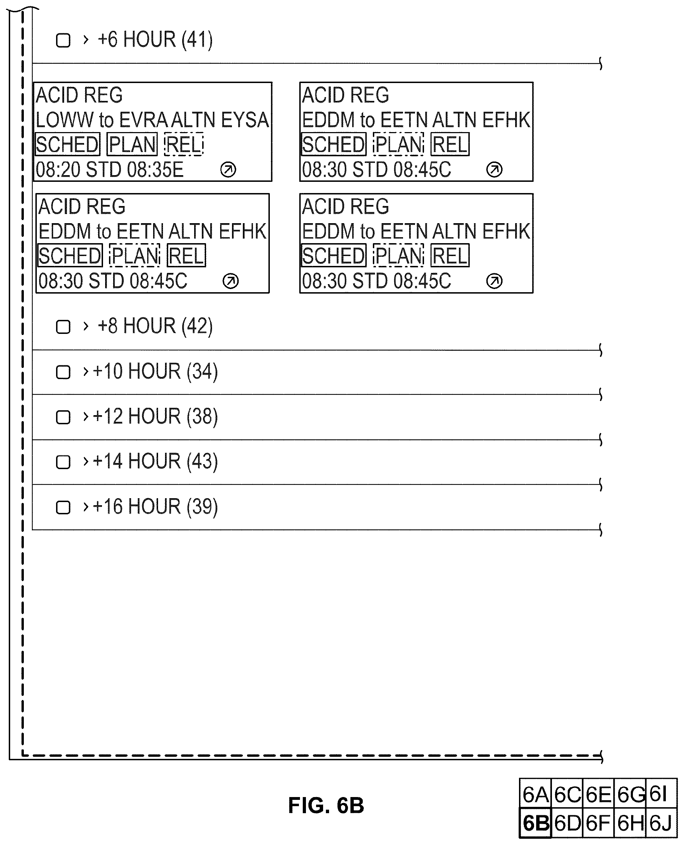

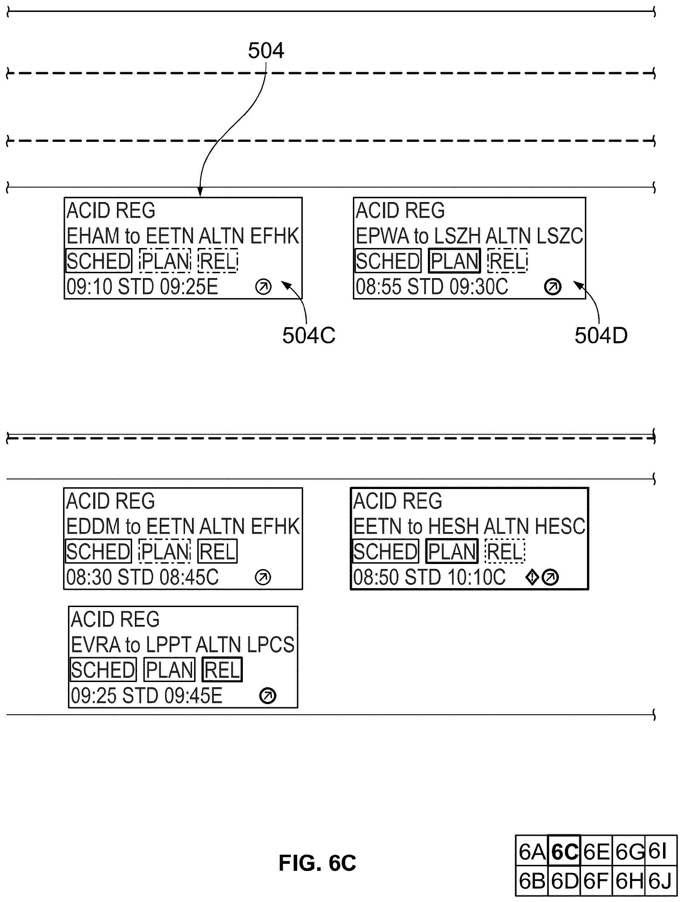

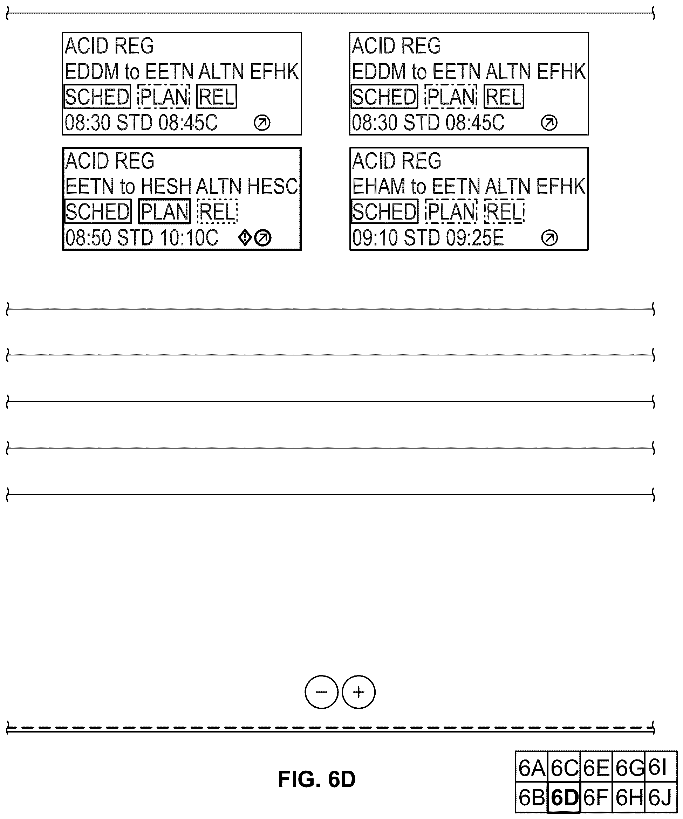

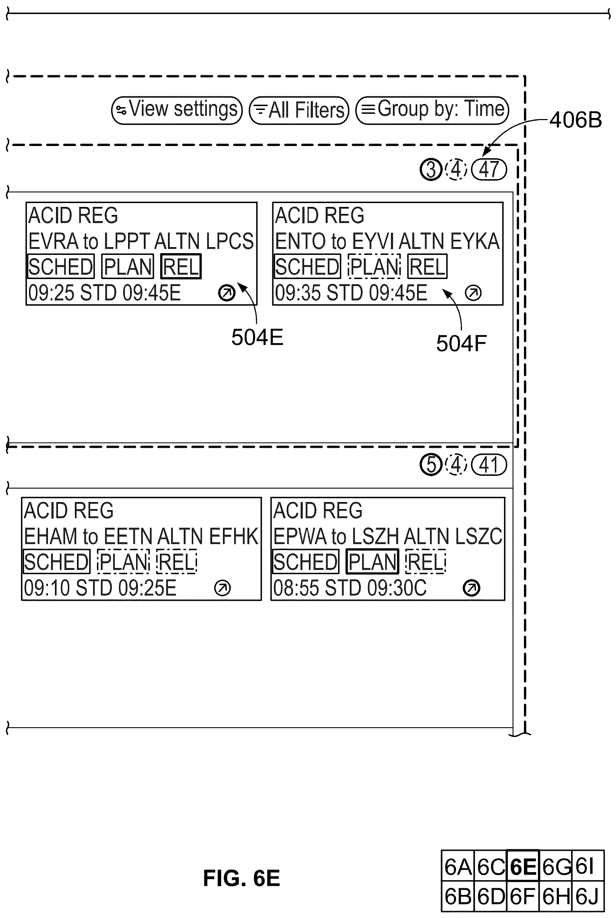

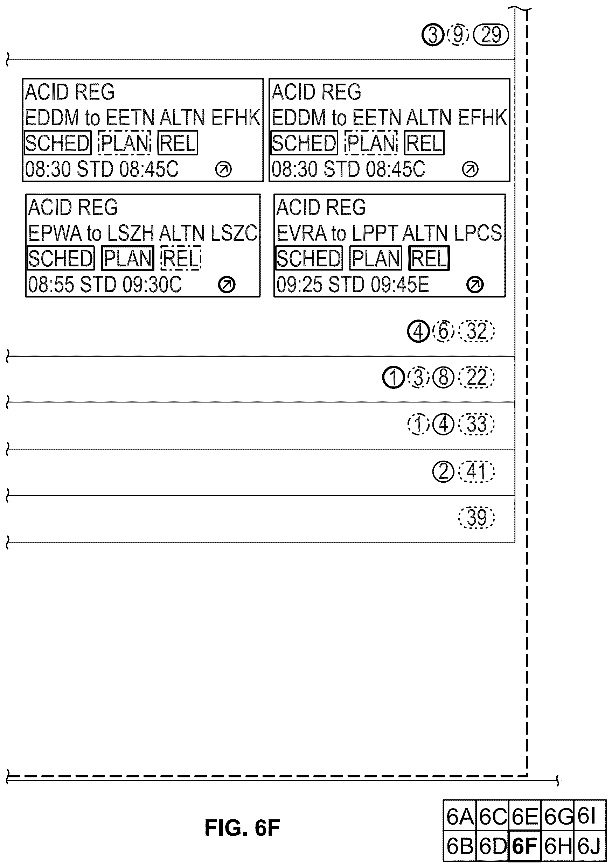

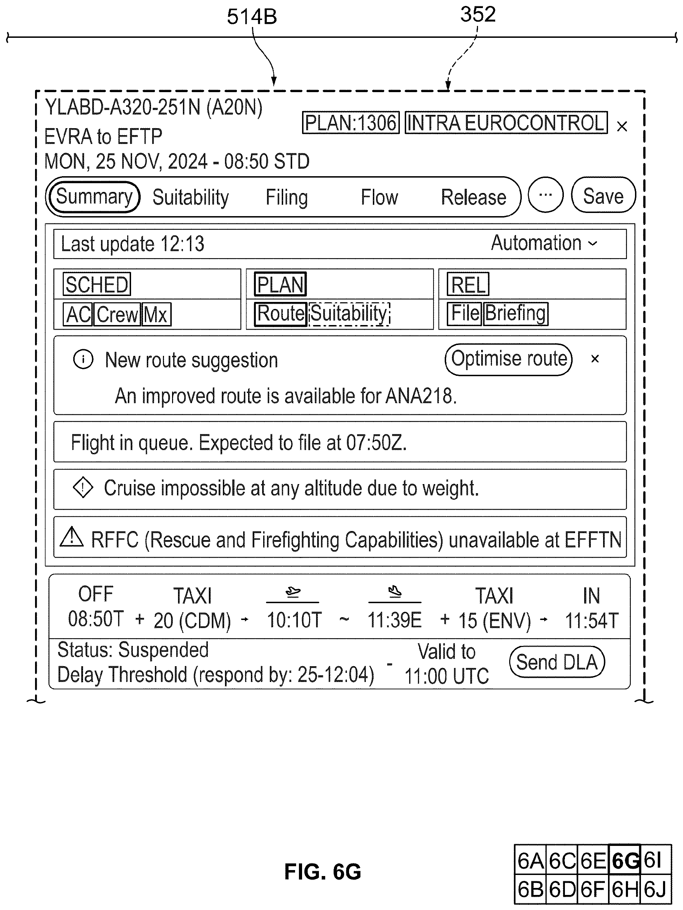

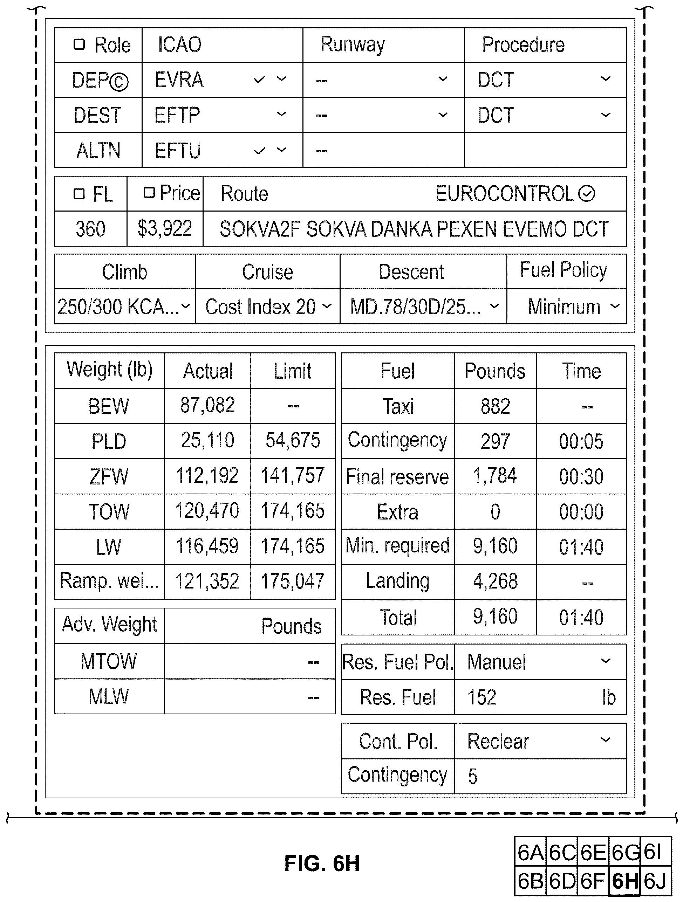

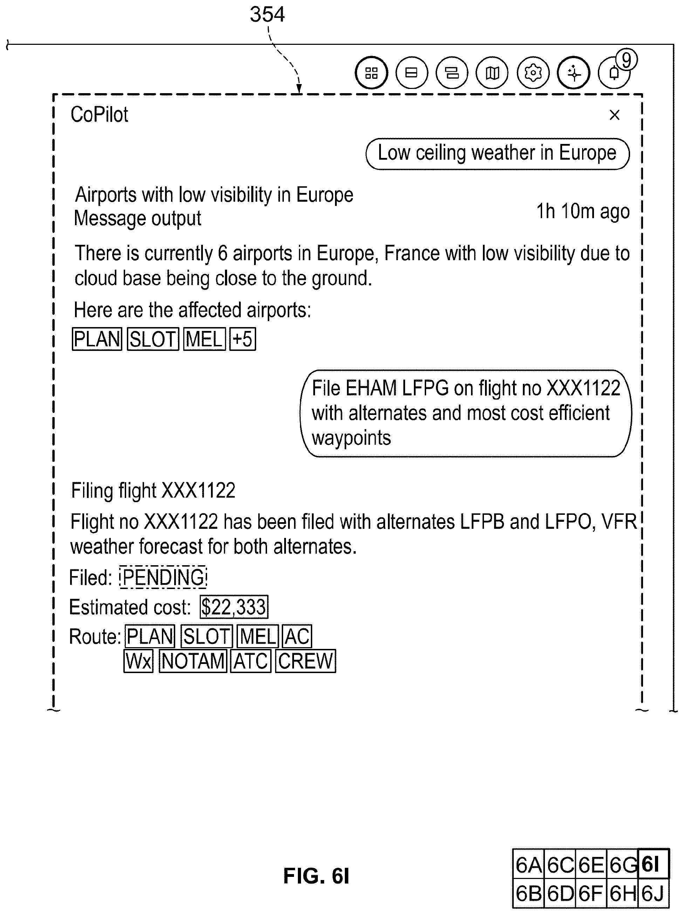

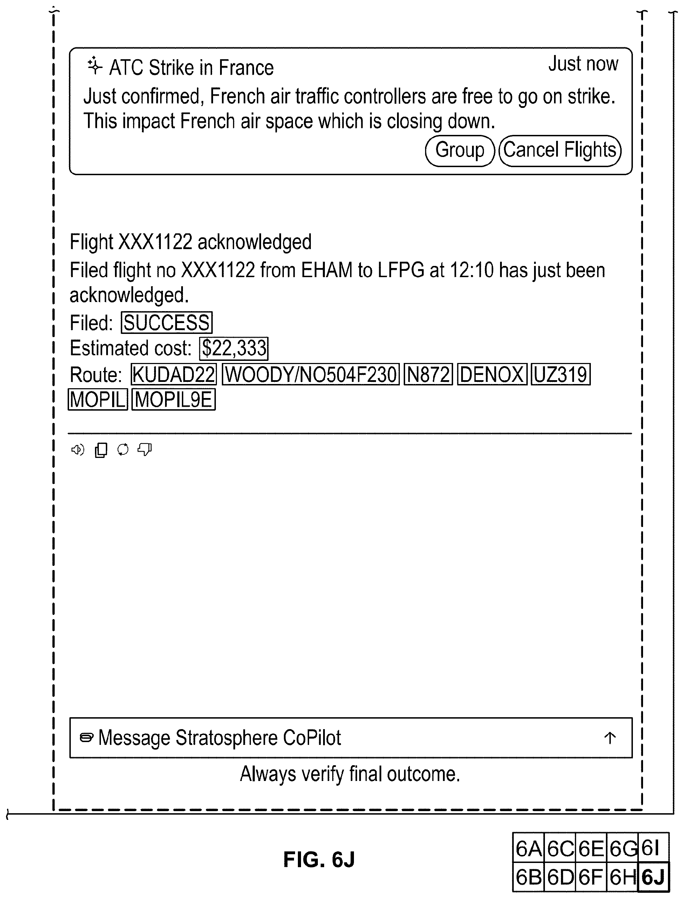

Responsive to receiving one or more user inputs from the operator selecting one or more of the filters 510, the control unit 104 may automatically change the display of the GUI 212 to remove or hide at least some of the graphical icons from the first section 350. For example, Figures 6A-6J illustrate a fourth view 600 of the GUI 212, according to one example of the present disclosure. The fourth view 600 includes a fourth portion 602 (shown in Figures 6A-6F) that includes the same number of 54 graphical icons indicated by the first summary detail 406A, with the second summary detail 406B indicating that 47 vehicles have a successful status, that 4 vehicles have a warning status, and that 3 vehicles have a critical status.

Additionally, like the third view 500 illustrated in Figures 5A-5J, the graphical icons 504 illustrated in the fourth view 600 include the same shape, size, and amount and type of information as the graphical icons illustrated in the third view 500. For example, the graphical icons 504 remain at the second level of magnification and include the same amount and type of information. However, each graphical icon associated with a successful status indicator has been removed from the fourth portion 602 responsive to the selection of two filters 610. For example, only the graphical icons 504A-G associated with the warning or critical status indicators are displayed in the fourth view 600. Additionally, the arrangement and position of the graphical icons 504A-G illustrated in Figures 6A-6F has changed relative to the arrangement of the graphical icons 504A-G illustrated in Figures 5A-5F. For example, a location of each of the seven graphical icons 504A-G displayed on the GUI 212 has changed responsive to the hiding or removing of the graphical icons associated with the successful status indicator from the GUI 212. For example, the placement, location, arrangement, or the like, of the graphical icons 504A-G has changed.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory.

Referring to Figures 1-6, examples of the subject disclosure provide systems and methods that allow large amounts of data to be quickly and efficiently analyzed by a computing device. For example, the control unit 104 can receive and analyze the hundreds, thousands, millions, or more data and/or records that may be in the form of different types of modalities. The control unit 104 may also analyze the data associated with the real-time situational awareness to identify anomalies or potential disruptions of travel of hundreds or thousands of vehicles. As such, large amounts of data, which may not be discernable by human beings, are being tracked and analyzed. The vast amounts of data are efficiently organized and/or analyzed by the control unit 104, as described herein. The control unit 104 analyzes the data in a relatively short time in order to quickly and efficiently code, decode, and execute datalink messages. A human being would be incapable of efficiently analyzing such vast amounts of data in such a short time. As such, examples of the present disclosure provide increased and efficient functionality, and vastly superior performance in relation to a human being analyzing the vast amounts of data.

In at least one example, components of the vehicle management system 100, such as the control unit 104, provide and/or enable a computer system to operate as a special computer system for monitoring and/or auditing maintenance, inspection, and/or repair work completed by a human operator. The control unit 104 improves upon standard computing devices by monitoring real-time situational awareness conditions, automatically identifying potential issues or disruptions that may occur, and communicating notifications, recommendations, or the like, with individuals (e.g., an operator of the control unit 104, operators of other control units associated with the dispatch center, operators of the vehicles, or the like) in an efficient and effective manner.

In at least one example, the processors of the control unit 104 can be an artificial intelligence or machine learning system. These types of systems may be trained from outside information and/or self-trained to repeatedly improve the accuracy with how data is analyzed. Over time, these systems can improve by determining such information with increasing accuracy and speed, thereby significantly reducing the likelihood of any potential errors. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data.

Based on this feedback, the systems may be trained by adjusting one or more parameters, weights, rules, criteria, or the like, used in the analysis of the same. This process can be performed using the data and ensemble data instead of training data, and may be repeated many times to repeatedly improve the monitoring and auditing performed by the control unit 104. The training minimizes conflicts and interference by performing an iterative training algorithm, in which the systems are retrained with an updated set of data (for example, data associated with user inputs received by the control unit 104, associated with real-time situational conditions at the departure locations and/or the destination location, etc.) and based on the feedback examined prior to the most recent training of the systems. This provides a robust analysis model that can better determine situational information in a cost effective and efficient manner.

Further, the disclosure comprises examples according to the following clauses:
Clause 1: A method of dynamically controlling plural graphical icons displayed on a graphical user interface (GUI) of a computer system, the method comprising:
   receiving, via the GUI, one or more user inputs; and
   automatically changing a magnification of plural graphical icons displayed on the GUI between plural different levels of magnification responsive to receiving the one or more user inputs, wherein changing the magnification of the plural graphical icons changes a size of one or more of the plural graphical icons and a number of the plural graphical icons displayed on the GUI.
Clause 2: the method of clause 1, further comprising changing the magnification of the plural graphical icons between a first level of magnification and a second level of magnification, wherein the plural graphical icons are configured to display a first set of information while the plural graphical icons are at the first level of magnification, and the plural graphical icons are configured to display a second set of information while the plural graphical icons are at the second level of magnification.
Clause 3: the method of clause 2, wherein the first set of information includes a first amount of data and a first type of data, and wherein the second set of information includes a second amount of data that is different than the first amount of data and a second type of data that is different than the first type of data.
Clause 4: the method of any of clauses 1-3, wherein each of the plural graphical icons is associated with a travel plan of a corresponding vehicle.
Clause 5: the method of clause 4, wherein each of the plural graphical icons includes a status indicator, wherein the status indicators are configured to provide one or more of a status of the vehicle or a status of the travel plan of the vehicle.
Clause 6: the method of clause 5, wherein the one or more user inputs includes selecting one or more filtering options, and further comprising automatically changing an arrangement of the plural graphical icons displayed on the GUI based on the status indicator of each of the plural graphical icons and the one or more filtering options.
Clause 7: the method of clause 5, further comprising identifying a first set of icons of the plural graphical icons to be associated with a first group and identifying a second set of icons of the plural graphical icons to be associated with a second group based in part on the status indicators of the plural graphical icons.
Clause 8: the method of clause 7, wherein a first graphical icon of the plural graphical icons is configured to be associated with the first group, and further comprising:
   determining a change in the status indicator of the first graphical icon; and
   automatically changing the association of the first graphical icons from the first group to the second group responsive to determining the change in the status indicator of the first graphical icons.
Clause 9: the method of clause 7, wherein the one or more user inputs includes receiving, at the GUI, a selection of the first group including the first set of icons, and further comprising:
   removing the second set of icons associated with the second group from the GUI responsive to receiving the one or more user inputs selecting the first group.
Clause 10: the method of clause 9, further comprising automatically changing a position of the first set of icons displayed on the GUI responsive to the removing of the second set of icons from the GUI.
Clause 11: the method of any of clauses 5-10, further comprising:
   determining that the status indicator of a first graphical icon indicates an issue associated with one or more of the travel plan or the corresponding vehicle associated with the first graphical icon; and
   displaying a message on the GUI based in part on the status indicator of the first graphical icon, wherein the message includes one or more a notification of a delay in the travel plan, an updated travel plan, or a notification of maintenance or repair work required by the vehicle.
Clause 12: the method of clause 11, wherein the message includes a recommendation to change a portion of the travel plan of the vehicle.
Clause 13: A method of changing an appearance of plural graphical icons displayed on a graphical user interface (GUI) of a computer system, the method comprising:
   receiving, via the GUI, one or more user inputs to change a magnification of one or more of plural graphical icons displayed on the GUI; and
   automatically changing the magnification of the one or more graphical icons displayed on the GUI between a first level of magnification and a second level of magnification, wherein changing the magnification of the one or more graphical icons changes a size of the one or more graphical icons and a number of the one or more graphical icons displayed on the GUI, wherein the one or more graphical icons are configured to display a first set of information while the one or more graphical icons are at the first level of magnification, and the one or more graphical icons are configured to display a second set of information while the one or more graphical icons are at the second level of magnification.
Clause 14: the method of clause 13, wherein each of the plural graphical icons is associated with a travel plan of a corresponding vehicle and each of the plural graphical icons includes a status indicator, wherein the status indicators are configured to indicate one or more of a status of the travel plan or a status of the vehicle.
Clause 15: the method of clause 14, further comprising:
   determining that the status indicator of a first graphical icon indicates an issue associated with one or more of the travel plan or the corresponding vehicle associated with the first graphical icon; and
   displaying a message on the GUI based in part on the status indicator of the first graphical icon.
Clause 16: the method of clause 14, further comprising automatically assigning each of the plural graphical icons to one or more groups based at least in part on the status indicators
Clause 17: the method of clause 16, further comprising:
   identifying a first set of icons of the plural graphical icons to be associated with a first group of the one or more groups and identifying a second set of icons of the plural graphical icons to be associated with a second group of the one or more groups based in part on the status indicators of the plural graphical icons;
   determining a first order of the first set of icons associated with the first group;
   changing positions of one or more of the plural graphical icons of the first set of icons displayed on the GUI based on the first order;
   determining a second order of the second set of icons associated with the second group; and
   changing positions of one or more of the plural graphical icons of the second set of icons displayed on the GUI based on the second order.
Clause 18: the method of clause 17, wherein a first graphical icon of the plural graphical icons is configured to be associated with the first group, and further comprising:
   identifying the status indicator of the first graphical icon has changed;
   determining the first graphical icon is associated with the second group;
   changing the association of the first graphical icon from the first group to the second group responsive to identifying that the status indicator of the first graphical icon has changed; and
   automatically changing a placement of the first graphical icon displayed on the GUI based on the first graphical icon being associated with the second group.
Clause 19: the method of clause 17, wherein the one or more user inputs includes receiving, at the GUI, a selection of the first group including the first set of icons, and further comprising:
   removing the second set of icons associated with the second group from the GUI responsive to receiving the one or more user inputs selecting the first group; and
   automatically changing an arrangement of the first set of icons displayed on the GUI responsive to the removing of the second set of icons from the GUI.
Clause 20: a non-transitory computer-readable storage medium comprising executable instructions that, in response to execution, cause one or more control units comprising one or more processors to perform the operations comprising:
   receiving, via a graphical user interface (GUI), one or more user inputs to change a magnification of one or more of plural graphical icons displayed on the GUI; and
   automatically changing the magnification of the one or more graphical icons displayed on the GUI between a first level of magnification and a second level of magnification, wherein changing the magnification of the one or more graphical icons changes a size of the one or more graphical icons and a number of the one or more graphical icons displayed on the GUI, wherein the plural graphical icons are configured to display a first set of information while the plural graphical icons are at the first level of magnification, and the plural graphical icons are configured to display a second set of information while the plural graphical icons are at the second level of magnification.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

## Claims

1. A method of dynamically controlling plural graphical icons (304) displayed on a graphical user interface, GUI, (212) of a computer system, the method comprising:
receiving, via the GUI (212), one or more user inputs; and
automatically changing a magnification of plural graphical icons (304) displayed on the GUI (212) between plural different levels of magnification responsive to receiving the one or more user inputs, wherein changing the magnification of the plural graphical icons (304) changes a size of one or more of the plural graphical icons (304) and a number of the plural graphical icons (304) displayed on the GUI (212),
wherein a user monitors a plurality of flight operations of a plurality of vehicles by interacting with the GUI (212).

2. The method of claim 1, wherein changing the magnification of the plural graphical icons (304) is performed between a first level of magnification (400) and a second level of magnification (500), wherein the plural graphical icons (304) are configured to display a first set of information while the plural graphical icons (304) are at the first level of magnification (400), and the plural graphical icons (304) are configured to display a second set of information while the plural graphical icons (304) are at the second level of magnification (500).

3. The method of claim 2, wherein the first set of information includes a first amount of data and a first type of data, and wherein the second set of information includes a second amount of data that is different than the first amount of data and a second type of data that is different than the first type of data.

4. The method of any of the preceding claims, wherein each of the plural graphical icons (304) is associated with a travel plan of a corresponding vehicle (108).

5. The method of claim 4, wherein each of the plural graphical icons (304) includes a status indicator, wherein the status indicators are configured to provide one or more of a status of the vehicle (108) or a status of the travel plan of the vehicle (108).

6. The method of claim 5, wherein the one or more user inputs includes selecting one or more filtering options (510, 610), and further comprising automatically changing an arrangement of the plural graphical icons (304) displayed on the GUI (212) based on the status indicator of each of the plural graphical icons (304) and the one or more filtering options (510, 610).

7. The method of claim 5, further comprising identifying a first set (302) of icons (304) of the plural graphical icons (304) to be associated with a first group and identifying a second set (402) of icons (304) of the plural graphical icons (304) to be associated with a second group based in part on the status indicators of the plural graphical icons (304).

8. The method of claim 7, wherein a first graphical icon of the plural graphical icons (304) is configured to be associated with the first group, and further comprising:
determining a change in the status indicator of the first graphical icon; and
automatically changing the association of the first graphical icons (304) from the first group to the second group responsive to determining the change in the status indicator of the first graphical icons (304).

9. The method of claim 7, wherein the one or more user inputs includes receiving, at the GUI (212), a selection of the first group including the first set (302) of icons (304), and further comprising:
removing the second set (402) of icons (304) associated with the second group from the GUI (212) responsive to receiving the one or more user inputs selecting the first group.

10. The method of claim 9, further comprising automatically changing a position of the first set (302) of icons (304) displayed on the GUI (212) responsive to the removing of the second set (402) of icons (304) from the GUI (212).

11. The method of any of claims 5 to 10, further comprising:
determining that the status indicator of a first graphical icon indicates an issue associated with one or more of the travel plan or the corresponding vehicle (108) associated with the first graphical icon; and
displaying a message on the GUI (212) based in part on the status indicator of the first graphical icon, wherein the message includes one or more notification of a delay in the travel plan, an updated travel plan, or a notification of maintenance or repair work required by the vehicle (108).

12. The method of claim 11, wherein the message includes a recommendation to change a portion of the travel plan of the vehicle (108).

13. A non-transitory computer-readable storage medium comprising executable instructions that, in response to execution, cause one or more control units comprising one or more processors to perform the operations of the method according to any of the preceding claims.

14. A vehicle management system (100) comprising a dispatcher center (102) comprising at least one control unit (104) configured to communicate with at least one vehicle (108), wherein the control unit (104) is further configured to communicate with a user via the GUI according to any of claims 1 to 12.

15. The system (100) of claim 14, wherein the control unit (104) further comprises an algorithm system configured to receive one or more of the graphical icons of the GUI, to automatically detect anomalies on the icons and to provide an update according to the detected anomalies to the user of the GUI.
